# EUROPÄISCHE PATENTSCHRIFT

(11) **EP 1 525 436 B1**
(45) Veröffentlichungstag und Bekanntmachung des Hinweises auf die Patenterteilung: **15.03.2006**
(21) Anmeldenummer: 03732547.9
(22) Anmeldetag: 06.06.2003
(51) Int. Cl.: G01F 11/02, B05B 11/00

(54) **FLÜSSIGKEITSSPENDER, AUSGABEKANÜLEN-BAUKASTENSYSTEM HIERFÜR UND AUSGABEKANÜLE**
LIQUID DISPENSER, HOLLOW DISPENSING NEEDLE KIT SYSTEM FOR SAID LIQUID DISPENSER, AND HOLLOW DISPENSING NEEDLE
DISTRIBUTEUR DE LIQUIDE, SYSTEME MODULAIRE DE CANULE DE DISTRIBUTION POUR CE DISTRIBUTEUR ET CANULE DE DISTRIBUTION

(30) Priorität: 31.07.2002 DE 10234930
(43) Veröffentlichungstag der Anmeldung: 27.04.2005
(73) Patentinhaber: Poulten & Graf GmbH, 97877 Wertheim/Main (DE)
(72) Erfinder: FESSEL, Theodor, 91522 Ansbach (DE)
(74) Vertreter: Grünecker, Kinkeldey, Stockmair & Schwanhäusser Anwaltssozietät
(86) Internationale Anmeldenummer: PCT/EP2003/005979
(87) Internationale Veröffentlichungsnummer: WO 2004/018977

(56) Entgegenhaltungen:
- EP-A- 0 922 939
- DE-A- 10 059 217
- DE-A- 19 807 647
- DE-U- 9 218 204

## Beschreibung

Die Erfindung betrifft einen Flüssigkeitsdispenser, insbesondere einen Dosierspender, mit einer Fördereinrichtung mit einem Förder- oder Dosierzylinder, einem darin bewegbaren Förder- oder Dosierkolben zum Fördern der Flüssigkeit aus einem Behälter zu einer Ausströmleitung zur Ausgabe der Flüssigkeit über eine Austrittsöffnung der Ausströmleitung, wobei in einer Ausgabekanüle die Ausströmleitung und entlang derselben eine Rückführleitung gebildet sind. Die Erfindung betrifft ferner ein Ausgabekanülen-Baukastensystem hierfür und eine Ausgabekanüle, insbesondere für einen derartigen Flüssigkeitsdispenser.

Aus der DE 41 37 351 C2 ist ein Flüssigkeitsdispenser bekannt, der einen Ventilblock mit einem Dreiwegehahn aufweist, über welchen wahlweise eine über einen Dosierzylinder aus einem Behälter geförderte Flüssigkeitsmenge entweder in eine in einer Ausgabekanüle angeordneten Ausströmleitung eingespeist, oder, im wesentlichen ohne die Ausgabekanüle zu durchlaufen, unmittelbar in den Behälter zurückgeführt werden kann.

Bei einer derartigen Gestaltung hat sich jedoch als nachteilig erwiesen, daß selbst dann, wenn das Ventil nach einem Ausgabevorgang in Rückführstellung gebracht ist, immer noch eine relevante Menge an Flüssigkeit in der Ausgabekanüle zurückbleibt, die nicht gespült werden kann und somit möglicherweise eintrocknen oder austropfen kann. Überdies ist aufgrund des hohen Totvolumens die Dosiergenauigkeit am Beginn eines Ausspendervorgangs problematisch.

Bei erstmaliger Inbetriebnahme dieser Vorrichtung kann die auszugebende Flüssigkeitsmenge nicht exakt bemessen werden, da das Totvolumen der noch ungefüllten Ausströmleitung nicht präzise berücksichtigt werden kann. Um zu exakten Ausgabemengen zu kommen, ist es daher erforderlich, vor dem erstmaligen Gebrauch die Ausgabekanüle mit Flüssigkeit zu füllen, was jedoch wieder die Gefahr eines ungewollten Flüssigkeitsaustrittes mit sich bringt.

Aus der DE 198 07 647 C2 ist ein Flüssigkeitsdidspenser der eingangs genannten Art bekannt, der in einer Ausgabekenüle gemeinsam Ausströmleitung und Rücklaufleitung aufweist mit einer wahlweisen Verbindung der Rücklaufleitung zur Ausströmleitung, so daß neben einem Flüssigkeitsdispenser auch ein Spülbetrieb möglich ist.

Der Erfindung liegt daher die Aufgabe zugrunde, einen Flüssigkeitsdispenser der eingangs genannten Art derart zu verbessern, daß das Totvolumen der Ausströmleitung verringert oder gänzlich beseitigt wird, und eine im wesentlichen vollständige Flüssigkeitsrückführung in den zugehörigen Vorratsbehälter ermöglicht wird, so daß Dosierpräzision und Handhabungssicherkeit des Flüssigkeitsspenders verbessert werden und Verluste an Flüssigkeit vermieden werden. Überdies liegt der Erfindung die Aufgabe zugrunde, ein Ausgabekanülen-Baukastensystem zu schaffen, das die Einsatzvariabilität von Ausgabekanülen auf unkomplizierte Weise erhöht, und eine Ausgabekanüle anzugeben, die im Spülbetrieb praktisch keinerlei Totvolumen aufweist.

Hinsichtlich eines Flüssigkeitsdispensers wird die Aufgabe erfindungsgemäß durch die Merkmale des Anspruchs 1 gelöst.

Die vorgenannte Aufgabe wird hinsichtlich des Ausgabekanülen-Baukastensystems erfindungsgemäß durch die Merkmale des Anspruchs 16 gelöst.

Hinsichtlich einer Ausgabekanüle wird die vorgenannte Aufgabe erfindungsgemäß durch die Merkmale der Ansprüche 17 und 35 gelöst.

Bevorzugte Ausgestaltungen des Flüssigkeitsdispensers bzw. des Ausgabekanülen-Baukastensystems sowie der Ausgabekanüle sind in den jeweils zugehörigen Unteransprüchen dargelegt.

Indem nicht nur, wie bei einem bekannten Flüssigkeitsdispenser eine Verbindung zwischen Dosierzylinder und Behälter hergestellt werden kann, bei dem aber die Ausströmleitung weitgehend undurchflossen bleibt, sondern erfindungsgemäß die Ausströmleitung und insbesondere die Austrittsöffnung Teil dieser Verbindung zwischen Dosierzylinder und Behälter ist, wird es auf möglich, zu verhindern, daß Flüssigkeitsrückstände, die sich zwischen der Ausströmleitung und der Austrittsöffnung befinden, eintrocknen oder ungewollt aus der Austrittsöffnung ins Freie austreten. Auch wird somit das Totvolumen vollständig bzw. im Wesentlichen vollständig beseitigt.

Hierdurch wird es jeweils möglich, einerseits eine sichere Rückführung von Flüssigkeit zu ermöglichen, die sich in der Ausströmleitung befindet. Auch kann die hierbei im Bereich der Austrittsöffnung in der Ausgabekanüle zurückbleibende Flüssigkeit und somit das Totvolumen auf ein Minimum reduziert werden.

Zur Definition des Begriffes Austrittsöffnung ist hierbei anzuführen, daß als Austrittsöffnung nicht irgendeine Stelle innerhalb der Ausgabekanüle oder des Dosierspenders bezeichnet wird, sondern daß als Austrittsöffnung die Stelle bezeichnet, an der im Spender- bzw. Ausgabebetrieb, also wenn Flüssigkeit von der Ausgabekanüle bzw. dem Dosierspender abgegeben wird, die Flüssigkeit tatsächlich ins Freie tritt, also die Ausgabekanüle bzw. den Dosierspender nach außen hin verläßt. Mit Austrittsöffnung wird also der im Spenderbetrieb in Flußrichtung äußerste bzw. letzte Querschnitt einer Förder- bzw. Ausströmleitung oder eines Förder- bzw. Ausströmkanals bzw. einer fluiddurchflossenen Röhre bezeichnet, soweit sie noch Teil der erfindungsgemäßen Ausgabekanüle bzw. Vorrichtung zur Abgabe einer Flüssigkeit ist.

Durch die beschriebene Ausgestaltung wird es auf vorteilhafte Weise möglich, im Rahmen eines ggf. mehrere Pumphübe umfassenden Spülvorgangs auch die in der Ausgabekanüle gebildete Ausströmleitung im wesentlichen vollständig und ohne umständliche Handhabungen zu spülen.

Durch die Zwei- oder Mehrteiligkeit der erfindungsgemäßen Ausgabekanüle ist es im Rahmen eines Ausgabekanülen-Baukastensystems in vorteilhafter Weise auch möglich, das Basisteil der Ausgabekanüle integral oder fest verbunden mit einem Ventilblock eines Dosierspenders auszubilden, wobei an das freie Ende des Basisteils unterschiedlich ausgebildete Wechselteil in lösbarer Weise ankoppelbar sind. Hierdurch kann der Flüssigkeitsspender bei Beschädigung des Wechselteils oder Verstopfung der daran ausgebildeten Austrittsöffnung weiter verwendet werden. Auch ist eine leichte Umstellung auf eine andere Variante von Ausgabekanülen gewährleistet, wenn die Ausgabekanüle bzw. ihr Grundkörper erfindungsgemäß zwei- oder mehrteilig bzw. teilbar ausgebildet ist.

ln vorteilhafter Weise sind die Ausströmleitung und die Rückführleitung gemeinsam in der vorzugsweise aus einem Kunststoffmaterial, oder bei einer besonders hochwertigen Ausführungsform aus Edelstahl gefertigten Ausgabekanüle ausgebildet. Eine derartige Ausgestaltung der Ausgabekanüle erweist sich insbesondere unter fertigungstechnischen Gesichtspunkten im Hinblick auf eine einfache Montage als besonders vorteilhaft und ermöglicht zudem eine effektive Aussteifung der Ausgabekanüle.

Die Ausströmleitung und die Rückführleitung sind vorzugsweise gleich lang ausgsbildet und weisen in vorteilhafter Weise jeweils den gleichen Querschnitt auf. Insbesondere bei einer Ausführungsform der Ausgabekanüle aus einem Kunststoffmaterial weisen die beiden Leitungen in vorteilhafter Weise jeweils einen kreisförmigen Querschnitt auf und sind bei einer gespritzten Ausführungsform in Längsrichtung jeweils schwach konisch verjüngt ausgebildet. Bei dieser Ausführungsform lassen sich besonders hohe Oberflächenqualitäten hinsichtlich der die beiden Leitungen begrenzenden Leitungsinnenwandungen erreichen. Bei einer Herstellung der Ausgabekanüle aus einem Strangpreßmaterial oder auch spanabhebend, beispielsweise aus einem Teflon-Halbzeug, ist die Ausstoßkanüle mit Vorteil von zylindrischer oder prismatischer Gestalt.

Die Ausströmleitung und die Rückführleitung sind in vorteilhafter Weise derart ausgebildet, daß in einem Endbereich der Ausgabekanüle die Öffnung der Ausströmleitung einer Öffnung der Rückführleitung unmittelbar benachbart angeordnet ist. Dadurch wird eine unmittelbare Überbrückung der beiden Leitungen möglich. Mit Vorteil sind dabei die Ausströmleitung und die Rückführleitung derart ausgebildet, daß deren Längsachsen zueinander parallel verlaufen. Die Ausgabekanüle ist dabei in vorteilhafter Weise derart gestaltet, daß diese in einer zur Längsachse der Ausströmleitung senkrechten Schnittebene einen kreisförmigen, elliptischen oder vorzugsweise "8"-förmigen Querschnitt aufweist.

Eine im Hinblick auf eine unter ergonomischen Gesichtspunkten besonders vorteilhafte Ausführungsform der Erfindung ist dadurch gegeben, daß die Verbindungsvorrichtung ein Ausgußelement aufweist, das in einem, der Ausströmöffnung benachbarten Bereich der Ausgabekanüle angeordnet ist, wobei das Ausgußelement in eine Überbrückungsposition bringbar ist, in welcher die Ausströmleitung mit der Rückführleitung verbunden ist. Das Ausgußelement ist in vorteilhafter Weise mit einer Griffeinrichtung versehen zum manuellen Wählen zwischen einer Verbindungsposition, einer Abgabeposition und ggf. auch einer Schließposition, in welcher die Austrittsöffnung der Ausgabekanüle verschlossen ist. Die genannte Griffeinrichtung ist in vorteilhafter Weise einstückig mit dem beispielsweise aus einem Kunststoffmaterial gebildeten Ausgußelement ausgebildet.

Das Ausgußelement ist in vorteilhafter Weise als Stellkern ausgebildet und schwenkbewegbar oder verschiebbar an/in einem Grundkörper der Ausgabekanüle befestigt, wobei dieser ein- oder mehrteilig ausgebildet sein kann. Die Schwenk- oder Verschiebeachse verläuft hierbei - je nach bevorzugter Ausführungsform - im wesentlichen in Querrichtung der Ausgabekanüle (horizontal oder vertikal), radial dazu oder parallel zu ihrer Mittelachse.

Bei einer bevorzugten Ausführungsform der Vorrichtung ist die Ausgabekanüle an einem Ventilblock angeschlossen, wobei in dem Ventilblock einen Flüssigkeitszufuhrkanal und einen Flüssigkeitsrücklaufkanal ausgebildet sind, die entsprechend mit der Ausströmleitung und der Rückführleitung verbunden sind. Dieser Ventilblock ist dabei in vorteilhafter Weise aus einem Kunststoffmaterial durch Spritzformen oder spanend hergestellt. Der in dem Ventilblock gebildete Flüssigkeitszufuhrkanal und der ebenfalls in dem Ventilblock gebildete Flüssigkeitsrücklaufkanal können dabei auf fertigungstechnisch besonders vorteilhafte Weise durch zylindrische Kernelemente gebildet werden, die in den zur Bildung des Ventilblocks in einem Formwerkzeug gebildeten Formraum eindringen und nach Aushärten des Kunststoffmateriales aus diesem abgezogen werden können.

Im Hinblick auf einen einfachen Aufbau eines Formwerkzeuges zur Bildung des Ventilblockes wird die Ausgabekanüle vorzugsweise als separates Bauteil ausgebildet und erst im Rahmen eines Montageschrittes in den Ventilblock eingepreßt. Dadurch wird es zum einen auf vorteilhafte Weise möglich, unterschiedliche Ausgabekanülen und ggf. auch unterschiedliche Ventilblöcke bedarfsgerecht miteinander zu kombinieren. Die Verwendung einer Preß-Verbindungseinrichtung erlaubt eine besonders fest haftende, hochdichte Befestigung der Ausgabekanüle an dem Ventilblock. Alternativ dazu kann die Ausgabekanüle auch über eine Gewindeeinrichtung an dem Ventilblock angebracht werden. Hierzu ist vorzugsweise die Ausgabekanüle oder eine Überwurfmutter mit einem Gewindeabschnitt versehen.

Der Ventilblock kann auch aus einem Block-Material, beispielsweise durch spanabhebende Bearbeitung gebildet sein. Im Hinblick auf eine hohe chemische Beständigkeit besteht der Ventilblock vorzugsweise aus einem Teflon-, Polypropylen-(PP), Polyethylen-(PE) oder Polyamid-Werkstoff.

Eine besonders stabile und im Bereich des Dosierzylinderfußes hochdichte Ausführungsform der Vorrichtung ist dadurch gegeben, daß der Förder- bzw. Dosierzylinder einstückig mit dem Ventilblock ausgebildet ist. Der Förder- bzw. Dosierzylinder und der Ventilblock und ggf. auch die Ausgabekanüle können dabei im Rahmen eines einzigen Kunststoffeinspritzvorganges im Inneren eines entsprechenden Formwerkzeuges gebildet werden, so daß nach Öffnen des Formwerkzeuges eine wenigstens aus Förder- bzw. Dosierzylinder und Ventilblock bestehende Baueinheit dem Formwerkzeug entnommen werden kann. Das Formwerkzeug ist hierzu in vorteilhafter Weise wenigstens zweiteilig ausgebildet, wobei eine zwischen den beiden Formteilen verlaufende Trennfläche vorzugsweise im wesentlichen parallel zu einer Ebene verläuft, die eine Mittelachse des Förder- bzw. Dosierzylinders enthält.

Eine bei der integralen Ausbildung von Förder- bzw. Dosierzylinder und Ventilblock vorteilhafte Ausführungsform der Erfindung ist dadurch gegeben, daß der Förder- bzw. Dosierzylinder einen aus einem Glas-, Keramik- oder duroplastischen Kunststoffmaterial gebildeten Zylinder-Einsatz umfaßt, der in einem einstückig mit dem Ventilblock ausgebildeten Mantelabschnitt aufgenommen, insbesondere eingespritzt ist. Dadurch wird es auf vorteilhafte Weise möglich, eine extrem hohe Dichtwirkung zwischen der Innenwandung des Förder- bzw. Dosierzylinders und einem darin leichtgängig hin- und hergehend bewegbaren Förder- bzw. Dosierkolben sicherzustellen. Aufgrund des vorzugsweise einstückig mit dem Ventilblock ausgebildeten Mantelabschnittes ist für den Zylinder-Einsatz eine effektive Verstärkung und ein effektiver Splitter-Schutz gegeben.

Eine im Hinblick auf eine hohe Materialerspamis vorteilhafte Ausführungsform der Erfindung ist dadurch gegeben, daß der Ventilblock als Skelettkonstruktion mit beabstandeten Stegen ausgebildet ist. Diese zueinander beabstandeten Stege verlaufen dabei in vorteilhafter Weise im wesentlichen parallel zu einer Mittelachse des Förder- bzw. Dosierzylinders. Die einzelnen Stege können zur weiteren Aussteifung des Ventilblocks durch weitere, fachwerkartig angeordnete Querverbindungsstege ausgesteift sein. Um eine besonders stabile Befestigung der Ausgabekanüle an einem derartigen, als Skelettkonstruktion ausgebildeten Ventilblock zu erreichen, ist in vorteilhafter Weise eine Aufnahmeausnehmung zur Aufnahme eines Fußabschnittes der Ausgabekanüle derart angeordnet, daß diese einen der sich axial erstreckenden Stege radial durchsetzt. Eine Mittelachse der vorzugsweise zylindrischen Aufnahmeausnehmung verläuft dabei in vorteilhafter Weise in einer entsprechenden Mittelebene des sich axial erstreckenden Versteifungssteges. Die Aufnahmeausnehmung ist dabei in vorteilhafter Weise in einem topfartigen Wandungsabschnitt aufgenommen. Dieser topfartige Wandungsabschnitt kann zusätzlich durch weitere, beispielsweise radiale Querversteigungsstege noch weiter ausgesteift werden.

Um eine positionsgenaue Befestigung der Ausgabekanüle an dem Ventilblock zu ermöglichen, ist in vorteilhafter Weise durch entsprechende Abschnitte des Ventilblockes und der Ausgabekanüle eine Positioniereinrichtung gebildet, durch die die Befestigungsposition der Ausgabekanüle an dem Ventilblock eindeutig festgelegt ist. Diese Positioniereinrichtung kann dabei entweder einen kanülenseitig ausgebildeten Eingriffsabschnitt aufweisen, der mit einem ventilblockseitig ausgebildeten Eingriffsgegenabschnitt in Eingriff bringbar ist, oder einen an dem Ventilblock im Bereich der Aufnahmeausnehmung ausgebildeten Eingriffsabschnitt aufweisen, der mit einem kanülenseitig ausgebildeten Eingriffsgegenabschnitt in Eingriff bringbar ist.

Um eine besonders hohe Dichtwirkung und um einen besonders festen Sitz der Ausgabekanüle in dem Ventilblock sicherzustellen, sind an einem Befestigungsabschnitt der Ausgabekanüle vorzugsweise mehrere Dichtlamellen ausgebildet, die unter hoher Flächenpressung mit einem entsprechenden Innen-Umfangsabschnitt einer in dem Ventilblock gebildeten Aufnahmeausnehmung in Kontakt treten.

Vorteilhafterweise ist hierbei die Verbindungsvorrichtung in eine erste Stellung bringbar, in der sich die Ausströmleitung in Strömungsverbindung mit der Austrittsöffnung befindet, wobei die Rückführleitung durch die Stellvorrichtung nach außen hin verschlossen ist, so daß Flüssigkeit ungehindert durch die Austrittsöffnung ins Freie gefördert werden kann. In einer zweiten Position der Verbindungsvorrichtung ist hierbei die Ausströmleitung und die Rückführleitung in Strömungsverbindung, wobei die Austrittsöffnung Teil der Flüssigkeitsverbindung ist, so daß eine Spülung im wesentlichen aller von Flüssigkeit durchflossenen Kanäle bzw. Leitungen oder Röhren einschließlich derjenigen, an der sich die Austrittsöffnung befindet, erfolgen kann.

Vorteilhafterweise ist die Verbindungsvorrichtung in zumindest eine dritte Stellung bringbar, in der die Ausströmleitung und die Rückführleitung voneinander getrennt und jeweils nach außen hin verschlossen sind.

In dieser Stellung ist vorteilhafterweise auch die Austrittsöffnung nach außen hin verschlossen. Hierdurch wird es sichergestellt, daß keine der in der Ausgabekanüle bzw. der diese enthaltenden Verbindungsvorrichtung vorhandenen Leitungen, Kanäle oder Röhren nach außen hin offen ist, so daß keinerlei Kontakt zwischen der Flüssigkeit in der Ausgabekanüle und der Umgebung (z.B. Luft) stattfinden kann. Hierdurch wird auf vorteilhafte Weise sowohl verhindert, daß Flüssigkeit in der Ausgabekanüle austrocknen kann, wie auch ein mögliches Austropfen von Restflüssigkeit sicher verhindert werden kann.

In vorteilhafter Weise weist die Verbindungsvorrichtung einen Stellkern auf, der um eine Stellachse drehbar ist, wobei der Stellkern vorzugsweise in einer Stellhülse angeordnet ist. Hierdurch wird zwischen dem Stellkern und der Stellvorrichtung eine Dichtfläche bzw. ein Dichtbereich gebildet, wodurch gewährleistet ist, daß ein unbeabsichtigtes Austreten bzw. Austrocknen von Flüssigkeit sicher verhindert wird. Auch wird hierdurch eine leichte Verstellbarkeit und eine sichere Haltung bzw. Montage des Stellkerns in der Stellhülse ermöglicht.

Vorzugsweise ist hierbei die Stellhülse als integraler Bestandteil der Ausgabekanüle ausgebildet, insbesondere in einem Guß, z.B. aus Kunststoff oder anderem geeigneten Material mit dieser angefertigt. In vorteilhafter Weise weist die Stellhülse einen Hohlraum in ihrem Inneren auf, der im wesentlichen vollständig oder zumindest im Randbereich des Hohlraums vom Stellkern ausgefüllt wird. Der Hohlraum ist hierbei in vorteilhafter Weise durch eine erste Öffnung mit der Ausströmleitung und durch eine zweite Öffnung mit der Rückführleitung verbunden und durch eine dritte Öffnung nach außen hin, also ins Freie, offen, so daß ein Durchfluß von Flüssigkeit aus der Ausströmleitung durch den Hohlraum zur Rückführleitung oder ins Freie hin ermöglicht wird.

In dem Stellkern sind zumindest ein, vorzugsweise aber mehrere Kanäle ausgebildet, die miteinander in Flüssigkeits- bzw. Strömungsverbindung stehen. In vorteilhafter Weise ist zumindest ein Teil eines Kanals in einem Bereich der Stellachse ausgebildet. Im Falle mehrerer Kanäle sind diese so angeordnet, daß zwischen dem Kanal, der mit der Ausströmleitung verbindbar ist und dem Kanal, der mit der Rückführleitung verbindbar ist, eine Strömungsverbindung besteht, insbesondere sind die Kanäle L-förmig oder U-förmig ausgebildet. Jedoch ist es auch denkbar, daß der bzw. die Kanäle über einen Hohlraum miteinander verbunden sind, in den sie münden.

Vorzugsweise ist der Stellkern zumindest teilweise als Rotationskörper (oder als Segment bzw. Teil hiervon) bezüglich der Stellachse, insbesondere kugel-, kegel-, zylinder- oder torusförmig ausgebildet. Hierdurch wird eine leichte Verstellbarkeit durch einfaches Verdrehen des Stellkernes innerhalb der Stellhülse und ein paßgenauer Sitz ermöglicht. Eine jeweils innen hohle Formgebung ist denkbar.

Vorteilhafte Weiterbildungen sowie weitere Merkmale der Vorrichtung zur Abgabe einer Flüssigkeit sowie der Ausgabekanüle und des Baukastensystems von Ausgabekanülen sind Gegenstand der jeweiligen Unteransprüche.

Die Erfindung wird nachstehend anhand von Ausführungsbeispielen und zugehörigen Zeichnungen näher erläutert. In diesen zeigen:
- Fig. 1: eine teilweise geschnittene Gesamtansicht einer ersten Ausführungsform einer Flüssigkeitsdispensers mit Ausgabekanüle,
- Fig. 2: eine Teilschnittsansicht der ersten Ausführungsbeispiels einer Ausgabekanüle in einer Ausgabebetriebsstellung,
- Fig. 3: eine Teilschnittsansicht der ersten Ausführungsbeispiels der Ausgabekanüle in Rückführbetriebsstellung,
- Fig. 4: eine Teilschnittsansicht eines ersten Ausführungsbeispiels der Ausgabekanüle in Verschlußstellung,
- Fig. 5: eine Teilschnittsansicht eines zweiten Ausführungsbeispiels einer Ausgabekanüle in Rückführbetriebsstellung,
- Fig. 6a: eine Teilschnittsansicht des zweiten Ausführungsbeispiels der Ausgabekanüle in Ausgabebetriebsstellung,
- Fig. 6b: eine Teilschnittansicht des zweiten Ausführungsbeispiels der Ausgabekanüle in Verschlußstellung,
- Fig. 7: eine Querschnittsansicht eines dritten Ausführungsbeispiels der Ausgabekanüle in Ausgabebetriebsstellung,
- Fig. 8: eine Querschnittsansicht des dritten Ausführungsbeispiels der Ausgabekanüle in Rückführbetriebsstellung,
- Fig. 9: eine Längsschnittansicht des dritten Ausführungsbeispiels der in Fig. 7,8 gezeigten Ausgabekanüle entlang der Linie A-A,
- Fig. 10: eine Längsschnittansicht des dritten Ausführungsbeispiels der in Fig. 7-9 gezeigten Ausgabekanüle entlang der Linie C-C,
- Fig. 11: eine Längsschnittansicht des dritten Ausführungsbeispiels der in Fig. 7-10 gezeigten Ausgabekanüle entlang der Linie B-B,
- Fig. 12: eine Längsschnittansicht des dritten Ausführungsbeispiels der in Fig. 7-11 gezeigten Ausgabekanüle entlang der Linie D-D,
- Fig. 13: eine Teilschnittsansicht eines vierten Ausführungsbeispiels einer Ausgabekanüle in einer Ausgabebetriebsstellung,
- Fig. 14: eine Teilschnittsansicht des vierten Ausführungsbeispiels der erfindungsgemäßen Ausgabekanüle in Rückführbetriebsstellung,
- Fig. 15: eine Teilschnittsansicht des vierten Ausführungsbeispiels der Ausgabekanüle in Verschlußstellung,
- Fig. 16: einen Horizontalschnitt eines fünften Ausführungsbeispiels einer Ausgabekanüle in einer Ausgabebetriebsstellung,
- Fig. 17: einen Horizontalschnitt des fünften Ausführungsbeispiels der Ausgabekanüle in Rückführbetriebsstellung,
- Fig. 18: einen Horizontalschnitt des fünften Ausführungsbeispiels der Ausgabekanüle in Verschlußstellung,
- Fig. 19: einen Vertikalschnitt des fünften Ausführungsbeispiels der in Fig. 16 gezeigten Ausgabekanüle in Ausgabebetriebsstellung entlang der Linie E-E,
- Fig. 20: einen Vertikalschnitt des fünften Ausführungsbeispiels der in Fig. 17 gezeigten Ausgabekanüle in Rückführbetriebsstellung entlang der Linie F-F,
- Fig. 21: einen Vertikalschnitt des fünften Ausführungsbeispiels der in Fig. 18 gezeigten Ausgabekanüle in Verschlußstellung entlang der Linie G-G,
- Fig. 22: einen Vertikalschnitt des fünften Ausführungsbeispiels der Ausgabekanüle in einer alternativen Verschlußstellung,
- Fig. 23: einen Vertikalschnitt eines sechsten Ausführungsbeispiels einer Ausgabekanüle in einer Ausgabebetriebsstellung entlang der Schnittlinien A-B / C-D,
- Fig. 24: einen Horizontalschnitt des in Fig. 23 gezeigten sechsten Ausführungsbeispiels der Ausgabekanüle in Ausgabebetriebsstellung entlang der Schnittlinien E-F / G-J,
- Fig. 25: einen Vertikalschnitt des in Fig. 23, 24 gezeigten sechsten Ausführungsbeispiels der Ausgabekanüle in Ausgabebetriebsstellung entlang der Schnittlinien R-S / K-P,
- Fig. 26: einen Vertikalschnitt eines sechsten Ausführungsbeispiels einer Ausgabekanüle in einer Rückführbetriebsstellung entlang der Schnittlinien A-B / C-D,
- Fig. 27: einen Horizontalschnitt des in Fig. 26 gezeigten sechsten Ausführungsbeispiels der Ausgabekanüle in Rückführbetriebsstellung entlang der Schnittlinien E-F / G-J,
- Fig. 28: einen Vertikalschnitt des in Fig. 26, 27 gezeigten sechsten Ausführungsbeispiels der Ausgabekanüle in Rückführbetriebsstellung entlang der Schnittlinien R-S / K-P,
- Fig. 29: einen Vertikalschnitt eines sechsten Ausführungsbeispiels einer Ausgabekanüle in einer Verschlußstellung entlang der Schnittlinie A-D,
- Fig. 30: einen Horizontalschnitt des in Fig. 23 gezeigten sechsten Ausführungsbeispiels der Ausgabekanüle in Verschlußstellung entlang der Schnittlinien E-F / K-N,
- Fig. 31: einen Vertikalschnitt des in Fig. 23, 24 gezeigten sechsten Ausführungsbeispiels der Ausgabekanüle in Verschlußstellung entlang der Schnittlinie G-J,
- Fig. 32: eine teilweise geschnittene Gesamtansicht einer siebten Ausführungsform einer erfindungsgemäßen Flüssigkeitsabgabevorrichtung mit Ausgabekanüle,
- Fig. 33: eine Teilschnittsansicht der siebten Ausführungsform einer erfindungsgemäßen Abgabekanüle in einer Ausgabebetriebsstellung,
- Fig. 34: eine Teilschnittsansicht der siebten Ausführungsform der erfindungsgemäßen Abgabekanüle in einer Rückführbetriebsstellung, und
- Fig. 35: eine Teilschnittsansicht der siebten Ausführungsform der erfindungsgemäßen Abgabekanüle in einer Entlüftungsstellung,

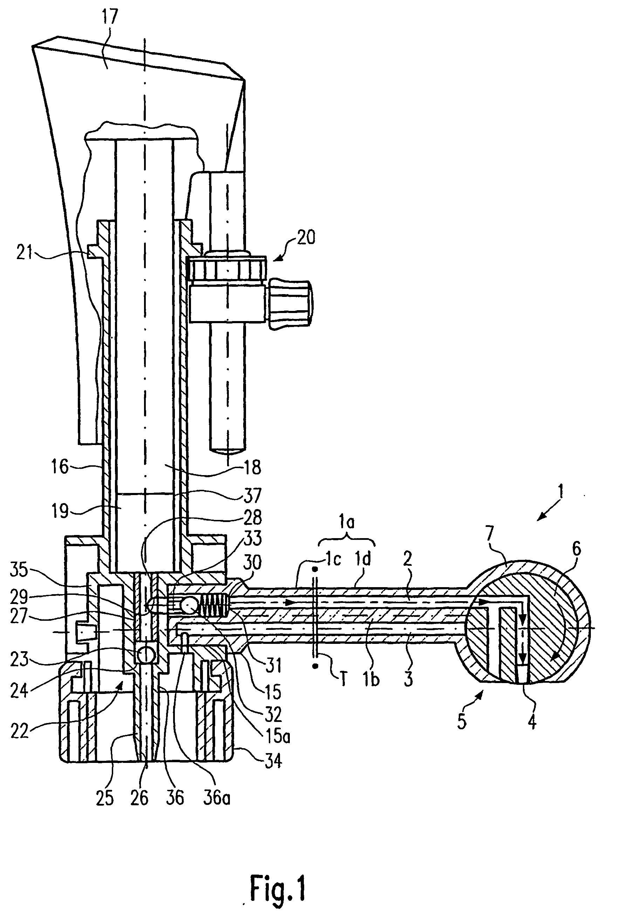

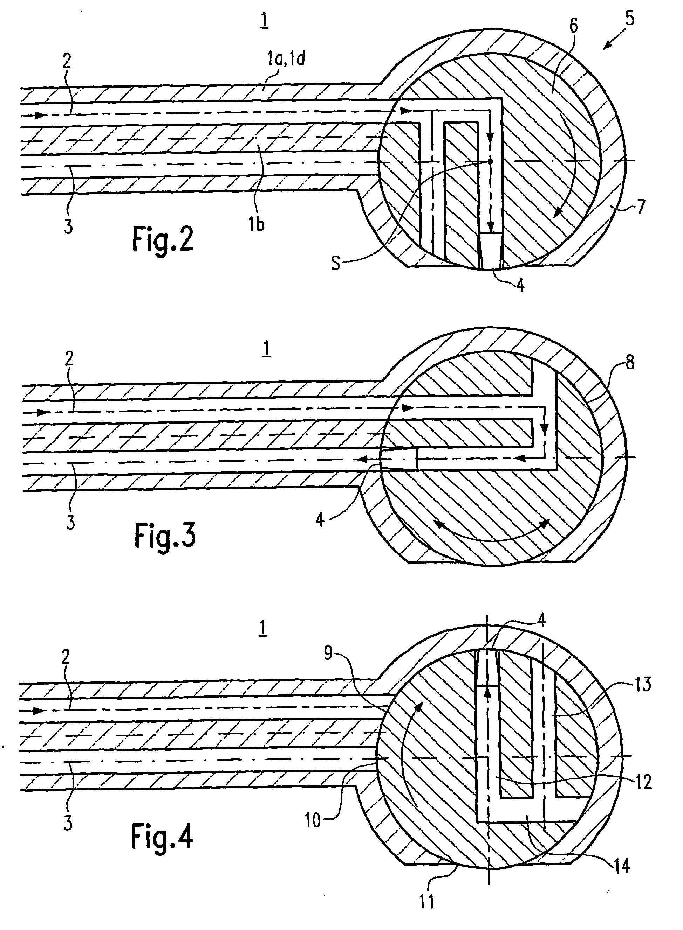

In Fig. 1 ist ein erstes Ausführungsbeispiel eines Flüssigkeitsdispeinsers in Form eines Dosier-Dispensers mit integral ausgebildetem Förder- bzw. Dosierzylinder und einer Ausgabekanüle mit integral eingeformter Rückführleitung dargestellt. Die Ausgabekanüle 1 ist hierbei in einer bevorzugten Ausführungsform in den Fig. 2 bis 4 in verschiedenen Betriebsstellungen gezeigt.

Die in den Fig. 1 bis 4 dargestellte Ausgabekanüle 1 umfaßt einen Grundkörper 1a, der vorzugsweise aus einem Kunststoffmaterial gefertigt ist, jedoch sind auch andere geeignete Materialien, insbesondere z.B. Metalle, Keramik etc. denkbar.

Der Grundkörper 1a der Ausgabekanüle 1 kann hierbei einstückig ausgebildet sein; vorzugsweise ist er jedoch teilbar bzw. zwei- oder mehrteilig ausgebildet. Wie in Fig.1 angedeutet, weist der Grundkörper 1a in dem hier beschriebenen Ausführungsbeispiel ein Basisteil 1c und ein Wechselteil 1d auf, die in lösbarer Weise an einer Teilungsstelle T miteinander flüssigkeitsdicht verbindbar sind. Die Verbindung kann beispielsweise als Steck- oder Schraubverbindung ausgebildet sein, auch ein Bajonetverschluß, eine Hülsenkupplung mit Überwurfmutter oder eine andere geeignete Kopplung von Basisteil 1c und Wechselteil 1d sind denkbar. Am Basisteil 1c ist eine Befestigungsabschnitt 15 zum Befestigen der Ausgabekanüle 1 an einer Dosierspendevorrichtung bzw. einem Ventilblock 35 hiervon vorgesehen. Am Wechselteil 1d ist eine Stellvorrichtung 5 und eine Austrittsöffnung 4 der Ausgabekanüle 1 vorgesehen.

Auf diese Weise ist ein Baukastensystem zur wahlweisen Verbindung verschiedener Ausgabekanülen mit dem Flüssigkeitsspender in einfacher Weise gebildet.

In dem Grundkörper 1a der Ausgabekanüle 1 sind sowohl eine Ausströmleitung 2 als auch eine Rückführleitung 3 ausgebildet. Die Ausströmleitung 2 und die Rückführleitung 3 sind durch einen Trennwandabschnitt 1b, der einstückig mit dem Grundkörper 1a ausgebildet ist, voneinander getrennt. Sowohl die Ausströmleitung 2 als auch die Rückführleitung 3 weisen vorzugsweise einen kreisförmigen Querschnitt auf und münden bei der hier dargestellten Ausführungsform in eine bezüglich einer Stellachse S rotationssymmetrische Mantelfläche eines Hohlraumes einer Stellvorrichtung 5. Andere Querschnittsformen der Leitungen bzw. Kanäle sind ebenso denkbar. Bei einem geteilten Grundkörper 1a sind die Leitungen jeweils in jedem der Teile 1c, 1d ausgebildet, so daß sie im gekoppelten Zustand jeweils fluchtend zu liegen kommen und Flüssigkeit verlustfrei durch die Ausgabekanüle 1 strömen kann.

Entsprechend ist auch bei einem einstückig ausgebildeten Grundkörper 1a die Ausgabekanüle 1 mit einem Befestigungsabschnitt 15 versehen, über welchen die Ausgabekanüle 1 an einem hier durch das Bezugszeichen 35 bezeichneten Ventilblock anbringbar ist. Der Befestigungsabschnitt 15 umfaßt bei der hier dargestellten Ausführungsform einen im wesentlichen zylindrischen Einpreßzapfenabschnitt 15a, der in enger Passung, abdichtend in eine entsprechend ausgebildete Paßbohrung des Ventilblocks 35 eingepreßt ist.

Alternativ zu der dargestellten Ausführungsform des Befestigungsabschnittes 15 ist es auch möglich, die Ausgabekanüle 1 bzw. ihren Grundkörper 1a integral mit dem Ventilblock auszubilden oder beispielsweise über eine Gewindeeinrichtung mit dem Ventilblock 35 zu verbinden. Die Gewindeeinrichtung ist mit Vorteil derart gestaltet, daß im festgezogenen Zustand zwischen den Gewindeflanken kein Hohlraum verbleibt. Dies kann insbesondere durch ein schwach konisches Gewinde erreicht werden. Eine derartige bzw. integrale / einstückige Ausbildung von Ventilblock 35 und Grundkörper 1a ist vorzugsweise bei mehrteiligem Grundkörper vorgesehen, wobei dann das Basisteil 1c integral mit dem Ventilblock 35 ausgebildet ist.

ln dem dargestellten Ventilblock 35 sind ein Flüssigkeitszufuhrkanal 26 sowie ein Flüssigkeitsrücklaufkanal 36 ausgebildet.

Der Flüssigkeitszufuhrkanal 26 umfaßt ein Saugventil 23, 24 und mündet in den Förder- bzw. Dosierraum 19. Über eine stimseitig in dem Befestigungsabschnitt 15 ausgebildete Durchgangsöffnung 29 ist er auch mit der Ausströmleitung 2 strömungsverbunden. Die in dem Grundkörper 1a der Ausgabekanüle 1 ausgebildete Rückführleitung 3 steht über eine, den Befestigungs- bzw. Einpreßzapfenabschnitt 15a oder Gewindezapfenabschnitt radial durchsetzende Durchgangsbohrung 36a mit dem Flüssigkeitsrücklaufkanal 36 in Verbindung. Der Flüssigkeitsrücklaufkanal 36 ist hier als im wesentlichen geradliniger Kanal ausgebildet und erstreckt sich von einem unteren Bereich des Ventilblockes 35 zu dem Befestigungsabschnitt 15. Durch die hohe Flächenpressung zwischen dem Befestigungsabschnitt 15 und der Innenwandung der in dem Ventilblock 35 ausgebildeten Befestigungsbohrung wird eine hohe Dichtigkeit des Übergangsbereiches zwischen der Rückführleitung 3 und dem in dem Ventilblock 35 ausgebildeten Flüssigkeitsrücklauf kanal 36 erreicht.

Bei der hier dargestellten Ausführungsform sind die Ausströmleitung 2 und die Rückführleitung 3 in nebeneinanderliegender Weise ausgebildet. Es ist auch möglich, die Ausströmleitung 2 und die Rückführleitung 3 zueinander koaxial auszubilden, so daß eine der beiden Leitungen durch einen entsprechend dimensionierten Ringraum gebildet ist. Die Rückführleitung 3 erstreckt sich durchgängig ununterbrochen von der Austrittsöffnung der Ausströmleitung 2 zurück zu dem Ventilblock 35.

Eine im wesentlichen vollständige Spülung der Ausströmleitung 2 kann beispielsweise dadurch erreicht werden, daß auf den Grundkörper 1a im Bereich der Mantelfläche 8 ein Kappenelement aufgesetzt wird, das eine Verbindung zwischen der Ausströmleitung 2 und der Rückführleitung 3 herstellt.

Anstelle einer derartigen Überbrückungseinrichtung ist im in Fig. 1 dargestellten bevorzugten Ausführungsbeispiel eine Verbindungsvorrichtung 5 verwendet, wie dies nachfolgend in Verbindung mit den Fig. 2-4 beschrieben wird.

Die Darstellungen gemäß den Fig. 2 bis 4 sind abgesehen von jeweils unterschiedlichen Stellungen der Verbindungsvorrichtung 5 identisch.

Abweichend von der Darstellung gemäß Fig. 1 ist der zur Aufnahme der Ausgabekanüle 1 vorgesehene Ventilblock 35 der Vorrichtung zur Ausgabe einer Flüssigkeit in der dargestellten Ausführungsform eines Dosier-Dispensers nicht mehr gezeigt.

Die hier dargestellte Ausgabekanüle 1 ist mit ihrem (nicht dargestellten) Ende des Grundkörpers 1a bzw. ihrem Basisteil 1c an dem Ventilblock 35 in gleicher Weise befestigt, wie dies vorab bereits in Verbindung mit Fig. 1 erläutert wurde.

An ihrem, dem Ventilblock abgewandten Ende des Grundkörpers 1a bzw. des Basisteils 1c hiervon ist die Ausgabekanüle 1 mit einer Verbindungsvorrichtung 5, die mit dem Grundkörper 1a bzw. dem Wechselteil 1d hiervon verbunden oder gemeinsam gefertigt ist, versehen. In der in Fig. 2 dargestellten Position befindet sich die Verbindungsvorrichtung 5 in einer Ausgabestellung und gestattet die Abströmung eines durch den Förder- bzw. Dosierzylinder zunächst über eine hier nicht dargestellte Ansaugleitung über den Flüssigkeitszufuhrkanal 26 angesaugten Flüssigkeit über die Ausströmleitung 2.

Die Verbindungsvorrichtung 5 umfaßt in der gezeigten Ausführungsform eine Stellhülse 7 und einen Stellkern 6, der in einem in der Stellhülse 7 ausgebildeten Hohlraum 8 angeordnet ist. Hierbei ist die Stellhülse 7 integral mit dem Grundkörper 1a der Ausgabekanüle 1, vorzugsweise aus einem Guß, ausgebildet. Der Stellkern 6 ist, wie in den Fig. 2 bis 4 gezeigt, in seinem Querschnitt vorzugsweise rund oder in einer abgewandelten Ausführungsform ringförmig ausgebildet. Der Stellkörper insgesamt ist zumindest teilweise als Rotationskörper bezüglich einer Stellachse S ausgebildet, insbesondere kugel-, kegel-, zylinder- oder torusförmig.

In der Ausführungsform einer Ausgabekanüle 1, wie sie in den Fig. 2 bis 4 dargestellt ist, sind innerhalb des Stellkerns 6 drei Kanäle 12,13,14 ausgebildet, die miteinander in Flüssigkeits- bzw. Strömungsverbindung stehen. Hierbei sind die Kanäle so angeordnet, daß der Kanal 14 in einem Ausgabe- bzw. Spenderbetriebszustand, also einer Stellung, bei der Flüssigkeit ins Freie abgegeben werden kann, sich in Verlängerung der Ausströmleitung 2 erstreckt. Der Kanal 14 geht, vorzugsweise rechtwinklig, in den Kanal 12 über, an dessen einem Ende sich die Austrittsöffnung 4 dort befindet, wo der Kanal 12 an der Umfangs- bzw. Mantelfläche des Stellkernes 6 endet.

Ebenfalls mit den Kanälen 14 bzw. 12 ist ein dritter Kanal 13 vorgesehen, der in einem Rückführbetriebszustand, also einer Stellung der Verbindungsvorrichtung 5, bei der das Flüssigkeit durch die Rückführleitung gefördert wird, in Verlängerung der Ausströmleitung 2 in dem Stellkern 6 ausgebildet ist. Der dritte Kanal 13 erstreckt sich vorzugsweise im wesentlichen parallel zu dem Kanal 12, an dessen äußerem Ende sich die Austrittsöffnung 4 befindet.

"Austrittsöffnung" meint hierbei diejenige Stelle, an der im Spender- bzw. Ausgabebetrieb, also wenn Flüssigkeit von der Ausgabekanüle bzw. dem Dosierspender abgegeben wird, die Flüssigkeit tatsächlich ins Freie tritt, also die Ausgabekanüle bzw. den Dosierspender nach außen hin verläßt. Mit Austrittsöffnung wird also der im Spenderbetrieb in Flußrichtung äußerste bzw. letzte Querschnitt einer Förder- bzw. Ausströmleitung oder eines Förder- bzw. Ausströmkanals bzw. einer von Flüssigkeit durchflossenen Röhre bezeichnet, soweit sie noch Teil des Flüssigkeitsdispensers bzw. der Ausgabekanüle ist.

Hierbei wird in der folgenden Beschreibung der Begriff Austrittsöffnung ortsgebunden bezüglich des genannten Querschnittsabschnittes der zugehörigen Leitung bzw. Röhre bzw. bezüglich des dazugehörigen Kanals beibehalten, selbst wenn sich die Ausgabekanüle bzw. der Flüssigkeitsspender nicht im Ausgabebetrieb befindet, also keine Flüssigkeit von der Ausgabekanüle bzw. dem Dosierspender ins Freie oder nach außen hin abgegeben wird, sondern der genannten Querschnittsabschnitt zur Durchführung von Flüssigkeit genutzt wird, um in einem anderen Betriebszustand als dem Spenderbetrieb Flüssigkeit innerhalb der Ausgabekanüle weiterzuleiten.

In der Rückführbetriebsstellung kann daher Flüssigkeit durch die Ausströmleitung 2 in den Kanal 13 und von diesem weiter in den Kanal 12 und durch die Austrittsöffnung-4 hindurch in die Rückführleitung 3 fließen. Die Ausströmleitung 2 endet hierbei in einer ersten Öffnung 9 am Hohlraum 8 der Stellhülse 7. Die Rückführleitung ist durch eine zweite Öffnung 10 ebenfalls mit dem Hohlraum 8 der Stellhülse 7 verbunden.

Der Hohlraum 8 selber ist durch eine dritte Öffnung 11 in der Stellhülse 7 nach außen hin ins Freie geöffnet. Die Öffnung 11 wird z.B. durch Abflachen einer runden bzw. gewölbten Außenform der Stellhülse 7 gebildet. Alle drei Öffnungen 9,10,11 sind durch ein Drehen des Stellkerns 6 wahlweise einzeln oder gemeinsam verschließbar und werden von der Mantelfläche des Stellkernes 6, die in der Stellhülse 7 drehbar gehaltert wird, abgedichtet.

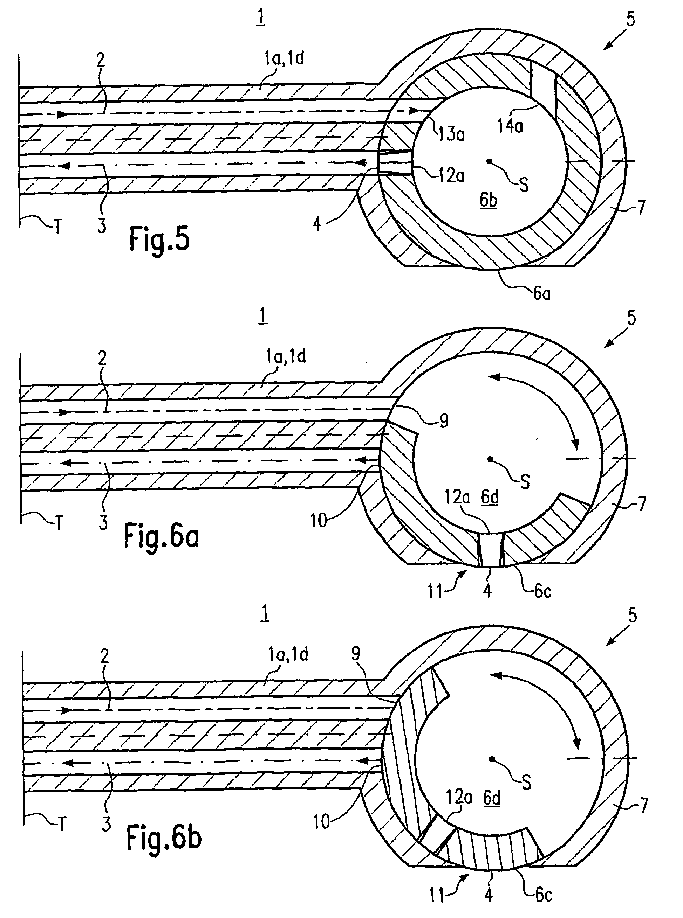

In den Fig. 5, 6a und 6b ist eine zweite Ausführungsform der Ausgabekanüle in einer Rückführbetriebsstellung, in einer Ausgabestellung und einer Verschlußstellung dargestellt, wobei die Ausgabekanüle in ihrem Aufbau und in ihrer Ein- bzw. Mehrteiligkeit des Grundkörpers 1a im wesentlichen der ersten in den Figuren 1 bis 4 dargestellten Ausführungsform einer solchen entspricht. In Abwandlung hierzu ist jedoch ein Stellkern 6a in der Stellhülse 7 gelagert, der einen weiteren Hohlraum 6b in seinem Inneren aufweist, in den die Kanäle 12a, 13a, 14a münden und hierbei über den Hohlraum 6b miteinander in Strömungsverbindung stehen.

Während bei der in Fig. 5 gezeigten zweiten Ausführungsform der Ausgabekanüle der Stellkern 6a als ein in dem gezeigten Querschnitt ringförmiger Stellkern gezeigt ist, der einen geschlossenen Ring bildet, und der an seiner Außenseite lediglich durch die Kanäle 12a, 13a und 14a durchbrochen ist, zeigen die Fig. 6a und 6b eine Abwandlung dieses Stellkerns.

Bei dieser in Fig. 6a, 6b gezeigten Abwandlung ist der Stellkern als Ringsegment ausgebildet, das vorzugsweise einen 180°-Segmentwinkel aufweist. Im Bereich dieses Ringsegmentes ist lediglich ein Kanal, der Kanal 12a, ausgebildet, der den Hohlraum im Inneren der Stellhülse bzw. des Stellkernes mit der Ausströmöffnung 4 verbindet.

Die erste Öffnung 9, an der die Ausströmleitung 12 endet, sowie die zweite Öffnung 10, an der die Rückströmleitung 3 beginnt, werden entweder über das ausgebildete Segment des Stellkernes 6a einzeln bzw. zusammen verschlossen oder über das nicht ausgebildete Ringstück des Stellkernes freigegeben. Somit ist eine Flüssigkeitsströmung zwischen Ausströmleitung, Hohlraum 6d und Rückführleitung bei gleichzeitigem Verschluß der Ausströmöffnung 4 und des Kanales 12a möglich. Auch alle weiteren Funktionen der zweiten Ausführungsform der Ausgabekanüle in ihren beiden in der Fig. 5 bzw. 6a und 6b dargestellten Abwandlung sind entsprechend der ersten Ausführungsform einer erfindungsgemäßen Ausgabekanüle durchführbar.

Hierbei zeigt die Fig. 6b eine Verschlußstellung dieser Ausführungsform, bei der alle Kanäle 2,3,4 abgedichtet sind, so daß ein Austritt von Flüssigkeit aus der Ausgabekanüle ins Freie verhindert ist und auch ein Durchfluß innerhalb der Ausgabekanüle unterbunden ist. In dieser Stellung sind alle Kanäle und auch der Hohlraum 6d jeweils von einander getrennt aber verschlossen, so daß ein Eintrocknen der Flüssigkeit sicher verhindert werden kann.

Durch Reduktion des Volumens des weiteren Hohlraums 6d auf ein notwendiges Minimum kann auch das im Bereich der Stellvorrichtung 5 verbleibende Flüssigkeit auf ein Minimum reduziert werden.

Die Funktionsweise der zweiten, in den Fig. 5, 6a und 6b dargestellten, Ausführungsform einer erfindungsgemäßen Ausgabekanüle entspricht im übrigen der der ersten Ausführungsform, wie sie in den Fig. 1 bis 4 dargestellt ist.

Weiterhin ist zu erwähnen, daß der Stellkern 6, 6a an seiner äußeren Umfangsfläche bzw. Mantelfläche mit einer Gleitschicht bzw. einem Gleitelement umgeben sein kann, das mit einer korrespondierenden Gleitschicht bzw. einem korrespondierenden Gleitelement auf der Innenseite (Hohlraum 8) der Stellhülse 7 zusammenwirkt, um eine besonders leichtgängige Bewegung des Stellkernes 6 relativ zu der Stellhülse 7 zu ermöglichen, und um ferner eine zuverlässige Abdichtung der Ausström- bzw. Rückführleitung 2,3 sowie der Kanäle 12,12a,13,13a,14,14a zu gewährleisten.

Die Gleitschichten bzw. Gleithüllen sind vorzugsweise aus einem Glas-, Kunststoff- oder Keramikmaterial gebildet und mit entsprechenden Durchgangsöffnungen versehen, die den Öffnungen der Leitungen bzw. der Kanäle entsprechen. Auf einer Seite des Stellkernes 6, 6a ist eine "nicht dargestellte" Bedieneinrichtung bzw. ein Griff, insbesondere ein Drehgriff mit dem Stellkern 6 verbunden, über den er manuell oder mittels einer Verbindungseinrichtung ferngesteuert betätigbar ist. Vorzugsweise sind an der Bedieneinrichtung, an dem Stellkern und/oder an der Stellhülse Rastelemente bzw. Anschläge vorgesehen, um ein sicheres und genaues Positionieren der Stellvorrichtung 5 in den einzelnen Betriebszuständen zu ermöglichen.

Ein weiterer Vorteil der erfindungsgemäßen Ausgabekanüle nach den beschriebenen Ausführungsformen ist, daß die Verbindungsvorrichtung 5 in eine Verschlußstellung (vgl. Fig. 4) bringbar ist, in der sowohl die Ausströmleitung 2 als auch die Rückführleitung 3 als auch die Austrittsöffnung 4 des Kanales 12 verschlossen sind, so daß keine Flüssigkeit aus der Ausgabekanüle 1 unbeabsichtigt ins Freie austreten kann. In dieser Stellung ist ferner sichergestellt, daß keine Flüssigkeit, das sich in einem Teil der Ausgabekanüle oder des Dosierspenders befindet, eintrocknen kann, da, wie beschrieben, alle Öffnungen nach außen hin ins Freie verschlossen sind.

Im folgenden werden anhand von Fig. 1 die weiteren Einzelheiten einer Vorrichtung zur Ausgabe einer Flüssigkeit in einer bevorzugten Ausführungsform eines Dosierspenders näher erläutert.

Die Darstellung gemäß Fig. 1 zeigt eine Axialschnittansicht durch einen Dosierdispenser mit einem integral mit dem Ventilblock 35 ausgebildeten Förder- bzw. Dosierzylinder 37, wobei der Förder- bzw. Dosierzylinder 37 in einem einstückig mit dem Ventilblock 35 ausgebildeten Mantelabschnitt 16 aufgenommen ist. In dem Förder- bzw. Dosierzylinder 37 ist ein mittels einer Handgriffeinrichtung 17 in vertikaler Richtung auf und abwärts bewegbarer Förder- bzw. Dosierkolben 18 aufgenommen. Der Förder- bzw. Dosierkolben ist bei der hier dargestellten Ausführungsform als präzisionsgeschliffener Kolben ausgebildet und begrenzt einen in dem Förder- bzw. Dosierzylinder 37 hinsichtlich seines Volumens veränderbaren Förder- bzw. Dosierraum 19.

Mittels einer Einstelleinrichtung 20 kann der zulässige Hub des Förder- bzw. Dosierkolbens 18 und damit das Maximal-Volumen des Förder- bzw. Dosierraumes 19 eingestellt werden. Die Einstellrichtung 20 wirkt dabei mit einem Anschlag 21 zusammen, der einstückig mit dem Mantelabschnitt 16 ausgebildet ist. Der Anschlag 21 umgibt einen oberen Endbereich des Förder- bzw. Dosierzylinders 37 und bildet zudem ein Verstärkungsglied zur Verstärkung der oberen Öffnung des Förder- bzw. Dosierzylinders 37.

In dem Ventilblock 35 ist ein Behälterventil 22 vorgesehen, das bei der hier dargestellten Ausführungsform eine Ventilkugel 23 umfaßt, die auf einem Präzisionsventilsitz 24 aufsitzt, der bei der hier dargestellten Ausführungsform durch einen präzisionsgeformten Oberflächenabschnitt des Ventilkörpers 35 gebildet ist. Unterhalb des Behälterventiles 22 erstreckt sich ein in einem Schlauchzapfen 25 gebildeter Ansaugkanal 26. Der Öffnungshub der Ventilkugel 23 wird durch ein Buchsenelement 27 begrenzt, das durch den Förder- bzw. Dosierzylinder 37 hindurch in den Ventilblock 35 eingepreßt ist.

Das Buchsenelement 27 bildet einen Flüssigkeitsdurchgangsweg 28, der den Ansaugkanal 26 über das Behälterventil 22 mit dem Förder- bzw. Dosierraum 19 verbindet. Das Buchsenelement 27 ist mit einer radialen Durchgangsöffnung 29 versehen, die den Flüssigkeitsdurchgangsweg 28 mit einem in dem Grundkörper 1a der Ausgabekanüle 1 aufgenommenen Druckventil 30 verbindet. Das in dem Grundkörper 1a aufgenommene Druckventil 30 umfaßt eine mittels einer Feder 31 in eine Schließstellung gedrängte Ventilkugel 32 und ein in den Grundkörper 1a der Ausgabekanüle eingepreßtes Ventilsitzelement 33, das bei der hier dargestellten Ausführungsform aus einem Kunststoff-, Glas- bzw. Keramikmaterial gebildet ist.

Die genannte Ventilfeder 31 sitzt in der, in der Ausgabekanüle 1 gebildeten Ausströmleitung 2, die sich durchgängig von dem Druckventil 30 bis zu ihrer Öffnung 9 erstreckt (vgl. Fig. 1,4).

Die Öffnung 9 der Ausströmleitung 2 ist unmittelbar benachbart der Öffnung 10 der Rückführleitung 3 angeordnet. Die in der Ausgabekanüle 1 verlaufende Rückführleitung 3 weist im wesentlichen die gleiche Länge auf wie die in der Ausgabekanüle ausgebildete Ausströmleitung 2. Die Ausgabekanüle 1 ist in den Ventilblock 35 über den Einpreßzapfenabschnitt 15a eingepreßt. Der Einpreßzapfenabschnitt 15a ist mit einer radialen Durchgangsbohrung 36a versehen, die mit einer in dem Ventilblock 35 ausgebildeten Flüssigkeitswegeinrichtung bzw. Flüssigkeitsrücklaufkanal 36 verbunden ist, über welche etwaig über die Rückführleitung geförderte Flüssigkeit in den (nicht gezeigten) Behälter zurückgelangen kann.

Der Ventilblock 35 ist hier als Skelettkonstruktion ausgebildet und mittels einer Überwurfmutter 34 an einem Behälter oder beispielsweise auch an einem Versorgungssockel einer automatisch betätigten Dosiervorrichtung anbringbar. Alternativ zu der hier dargestellten Ausführungsform mit eingepreßter Ausgabekanüle 1 ist es in vorteilhafter Weise auch möglich, die Ausgabekanüle 1, den Ventilblock 35 und den Mantelabschnitt 16 einstückig, d.h. als Integralteil auszubilden. Bei einer entsprechenden Integral-Ausführungsform entfällt in vorteilhafter Weise das Ventilsitzelement 33, und eine entsprechende Ventilsitzfläche wird durch eine Umfangswandung der, das Buchsenelement 27 radial durchsetzenden Durchgangsbohrung gebildet. Die Ventilkugel 32 und ggf. auch die Ventilfeder 31 werden dabei vorzugsweise vor Einpressen des Buchsenelementes 27 in den Ventilblock 35 eingesetzt.

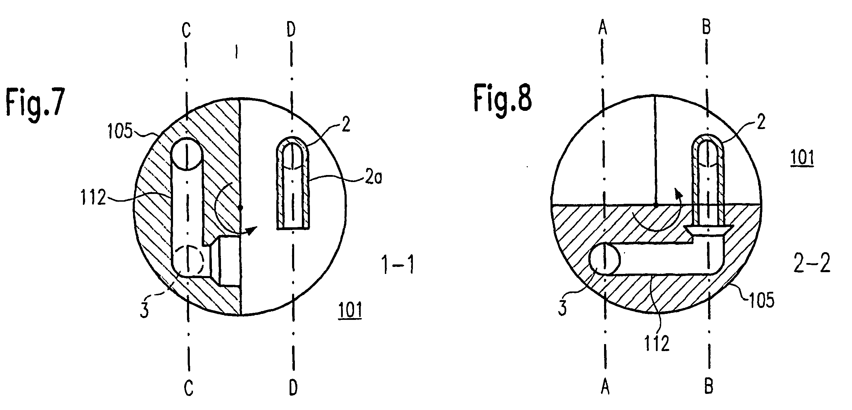

Eine dritte, abgewandelte Ausführungsform einer Ausgabekanüle ist in den Fig. 7 bis 12 dargestellt. Die nicht dargestellten bzw. nicht näher beschriebenen Einzelheiten hiervon entsprechen dem Aufbau der zuvor beschriebenen Ausführungsformen einer Ausgabekanüle, insbesondere kann deren Grundkörper 101a wieder ein- oder mehrteilig ausgeführt sein, wie zuvor beschrieben.

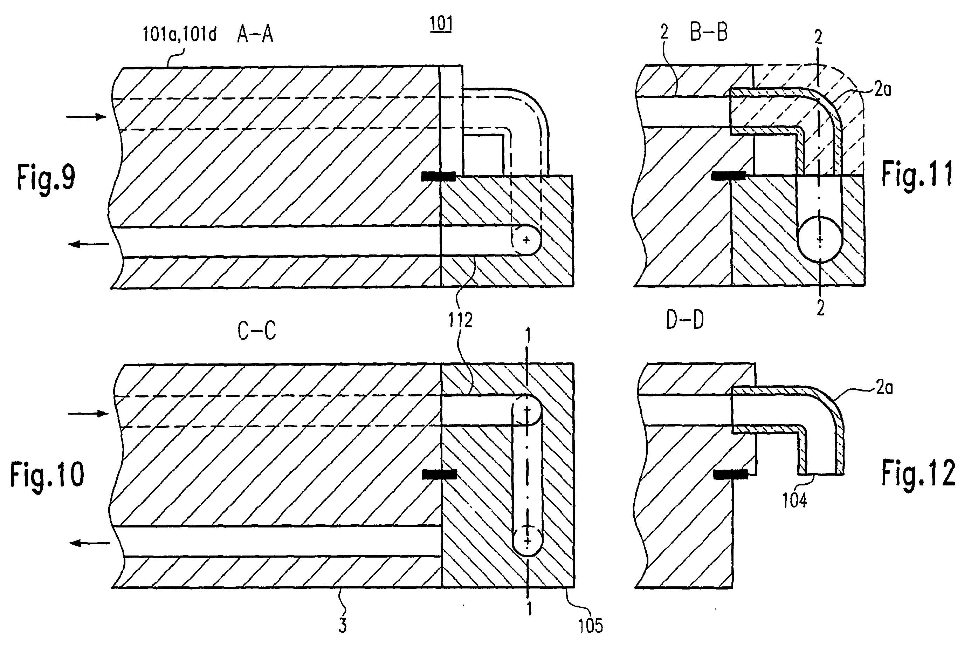

Hierbei zeigen die Fig. 9 und 11 die Kanüle 101 jeweils in einem Rückführbetriebszustand jeweils in einem Längsschnitt in den Ebenen A-A bzw. B-B. Figur 8 stellt einen Querschnitt der Kanüle 101 in den Rückführbetriebszustand dar.

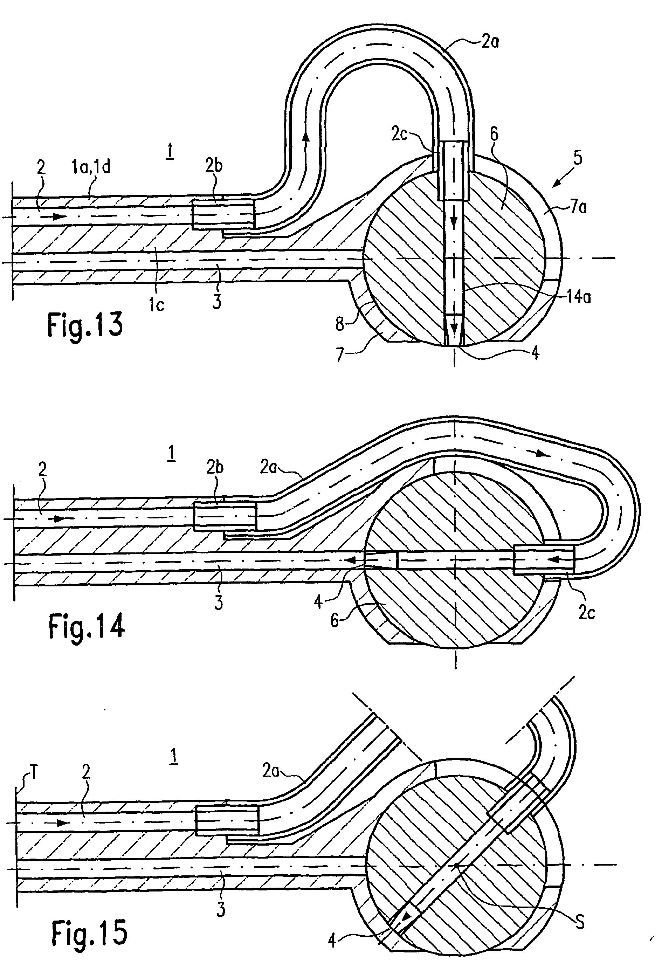

Die Fig. 10 und 12 zeigen wiederum jeweils einen Längsschnitt durch die Kanüle 101, diesmal in einem Spender- bzw. Ausgabebetriebszustand entlang der Ebenen C-C bzw. D-D. Fig. 7 zeigt hierbei einen Querschnitt durch die Kanüle 101 in einer Ebene 1-1, wie sie in der Fig. 10 gezeigt ist.

In den Fig. 7 und 8 ist jeweils im rechten oberen Bereich der im Querschnitt kreisförmig dargestellten Kanüle 101 die Ausströmleitung 2 gezeigt, wobei sich die Rückführleitung 3 im linken unteren Bereich des kreisförmigen Querschnitts befindet. In den Fig. 9 bis 12 ist wiederum jeweils oben die Ausströmleitung 2 und unten die Rückführleitung 3 dargestellt. An der Stirnseite der Kanüle 101 ist ein halbzylinderförmiges Verschlußschieberteil 105 mittels einer geeigneten Lagerung drehbar um eine Mittelachse der kreisförmigen Kanüle 101 angeordnet.

Die Ausströmleitung 2 weist einen rohrförmig vorzugsweise nach unten gebogenen Ausströmfortsatz 2a auf, der aus der Stirnseite der Kanüle 101 heraustritt und an einer Austrittsöffnung 104 endet, wie beispielsweise in der Fig. 12 gezeigt. In dem drehbaren Verschlußschieberteil 105 ist ein Verbindungskanal 112 ausgebildet, der im Rückführbetriebszustand die Ausströmleitung 2, anschließend an die Austrittsöffnung 104 verlängert und diese mit der Rückführleitung 3 verbindet.

Zum Öffnen der Kanüle 101 wird das vorzugsweise halbzylinderförmig ausgebildete Verschlußschieberteil 105 im Uhrzeigersinn um 90° um die Mittelachse der Kanüle 101 gedreht, wodurch die Austrittsöffnung der Ausströmleitung freigegeben wird und gleichzeitig die Rückführleitung 3 an der Stirnseite der Kanüle 101 verschlossen wird.

Ein Vorteil der in den Fig. 7 bis 12 dargestellten Ausführungsform einer Ausgabekanüle 104 ist darin zu sehen, daß auch im Rückführbetriebszustand kein Totvolumen in den Leitungen bzw. Kanülen ungespült bleibt. Auch ist ein Austropfen bzw. Austrocknen der in den Leitungen möglicherweise zurückbleibenden Flüssigkeitsreste ausgeschlossen, da durch ein Verdrehen des Verschlußschieberteils 105 sowohl die Ausströmleitung 2 wie auch die Rücktrittsleitung 3 und insbesondere die Austrittsöffnung 104 vollständig von der Umgebung (z.B. Luft) abgeschlossen werden können. In einer vorteilhaften Ausführungsform ist der Ausströmfortsatz 2a in einem im wesentlichen vierteilkreisförmigen Fortsatz eines Grundkörpers 101a der Kanüle 101 ausgebildet, wie in Fig. 11 mittels strichlierter Linie angedeutet, so daß der Ausströmfortsatz 2a im wesentlichen vor Beschädigung durch Anstoßen geschützt ist.

Auch diese Ausführungsform der Ausgabekanüle 101 ist, wie gezeigt oder in Abwandlungen jederzeit mit einem Flüssigkeitsdispenser, insbesondere einem Dosierspender einsetzbar.

Eine vierte Ausführungsform der Ausgabekanüle wird im Folgenden beschrieben, wobei wiederum nur die Unterschiede zu den bereits beschriebenen Ausführungsformen aufgezeigt und dargestellt werden.

Die in den Figuren 13 bis 15 dargestellte vierte Ausführungsform einer Ausgabekanüle 1 stellt eine Abwandlung der in den Fig. 1 bis 4 gezeigten Ausführungsform dar. Im Gegensatz zu dieser mündet bei der vierten Ausführungsform nur die neben der Ausströmleitung 2 in dem Grundkörper 1a ausgebildete Rückführleitung 3 in den Hohlraum 8 der Verbindungsvorrichtung 5. Die Ausströmleitung 2 ist hingegen in einem Bereich nahe der Verbindungsvorrichtung 5 als flexible Leitung 2a ausgebildet, wofür insbesondere ein schlauchförmiges Element zum Einsatz kommen kann. Vorzugsweise ist der flexible Leitungsabschnitt 2a aus korrosionsbeständigem, dauerelastischem Material gefertigt und vorzugsweise transparent ausgeführt, so daß ein Durchfluß von Flüssigkeit festgestellt werden kann, noch bevor diese durch die Austrittsöffnung 4 strömt.

Die flexible Leitung 2a ist an ihrem stromaufwärts gelegenen Anfangsabschnitt vorzugsweise mit einem Rohrverbindungselement 2b mit dem Grundkörper 1a der Ausgabekanüle 1 fluiddicht verbunden. An ihrem stromabwärts gerichteten Ende ist die flexible Leitung 2a über ein weiteres Rohrverbindungselement 2c fluiddicht am Stellkern 6 der Verbindungsvorrichtung 5 angelenkt. Die Ausströmleitung 2 geht somit über ihren flexiblen Leitungsabschnitt 2a direkt zu einem in dem Stellkern 6 angeordneten Durchführkanal 14a über, der in der Austrittsöffnung 4 endet.

In Fig. 13 ist die soeben beschriebene vierte Ausführungsform einer Ausgabekanüle in einer Ausgabebetriebsstellung gezeigt. Fig. 14 zeigt dieselbe Ausgabekanüle, bei der der Stellker um 90° im Uhrzeigersinn gedreht wurde, um so die Ausgabekanüle in eine Rückführbetriebsstellung zu bringen.

Wie aus den Fig. 13 bis 15 ersichtlich, weist hierfür die Stellhülse 7 eine Ausnehmung 7a auf, in deren Bereich der flexible Leitungsabschnitt 2a der Ausströmleitung 2 an seinem stromabwärts gelegenen Ende zusammen mit dem Stellkern 6 um die Stellachse S schwenkbar ist.

In der in Fig. 14 gezeigten Rückführbetriebsstellung strömt Fluid durch den Grundkörper 1a bzw. das Basisteil 1c und das Wechselteil 1d hiervon innerhalb der Ausströmleitung 2, um sodann durch den flexiblen Leitungsabschnitt 2a der Ausströmleitung 2 in den Durchführkanal 14a des Stellkerns 6 zu gelangen und dann über die Austrittsöffnung 4 wiederum in die Rückführleitung 3 zu strömen, die das Fluid zu einem Fluidaufbewahrungsbehälter zurückleitet.

Fig. 15 zeigt die Ausgabekanüle 1 in einer Verschlußstellung, bei der der Stellkern 6 in eine Stellung zwischen der Ausgabebetriebsstellung und der Rückführbetriebsstellung gedreht ist. Hierdurch wird die Austrittsöffnung 4 verschlossen, indem sie an der Innenseite der Stellhülse 7 zu liegen kommt, so daß kein Fluid austreten kann.

Diese beschriebene Ausführungsform weist den Vorteil auf, daß weder ein internes noch ein externes Totvolumen besteht und eine Absperrung bereits nach einer Drehung von 45°, bezogen auf die Ausgabebetriebsstellung, erfolgt. Bei der Absperrung sind sowohl die Ausströmleitung wie auch die Rückführleitung abgedichtet. Der flexible Leitungsabschnitt der Ausströmleitung kann in einer Abwandlung mit einem partiellen Hahngehäuse verdeckt werden, um so Beschädigungen zu verhindern.

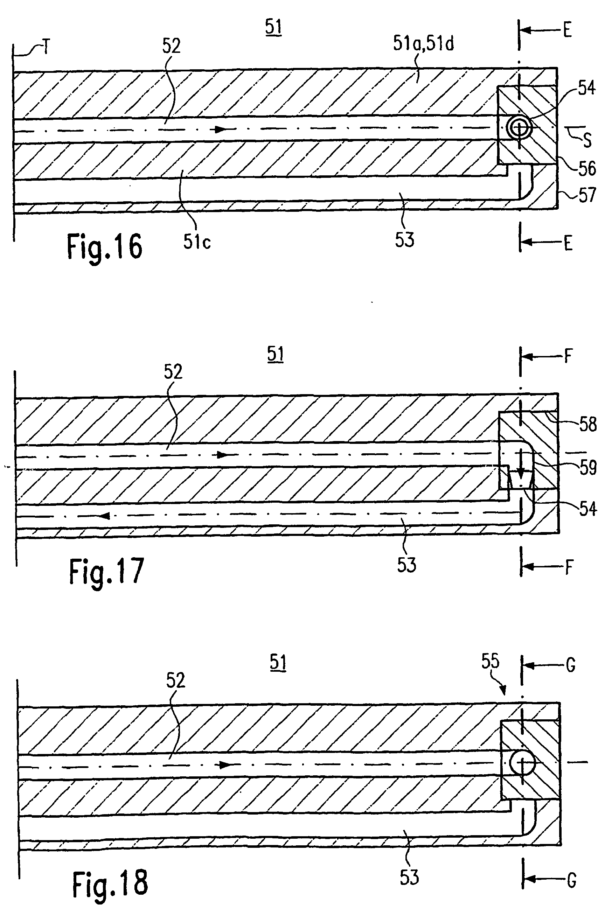

Eine fünfte Ausführungsform einer Ausgabekanüle ist in den Fig. 16 bis 22 dargestellt.

Die gezeigte Ausgabekanüle 51 unterscheidet sich von den zuvor beschriebenen Ausführungsformen im wesentlichen dadurch, daß die Ausströmleitung 52 und die Rückführleitung 53 in einer horizontalen Ebene angeordnet sind, wohingegen bei den zuvor beschriebenen Ausführungsformen die Ausströmleitung 2 und die Rückführleitung 3 vertikal übereinander in dem Grundkörper 1a der Ausgabekanüle 1 ausgebildet sind.

Ein Grundkörper 51a der Ausgabekanüle 51 kann wiederum einstückig oder mehrteilig ausgebildet sein, insbesondere kann er ein Basisteil 51c und ein Wechselteil 51d aufweisen. Auch ist es denkbar, ein Wechselteil 51d der Ausgabekanüle 51 direkt oder über ein Übergangsstück an einem Basisteil 1c einer Ausgabekanüle 1 anzuordnen und zu diesem eine Fluidverbindung herzustellen. Auch kann das Wechselteil 51d der Ausgabekanüle 51 um 90° gedreht, direkt an ein Basisteil 1c einer Ausgabekanüle 1 angeschlossen werden.

Im übrigen ist der grundsätzliche Aufbau der Ausgabekanüle 51 mit den zuvor beschriebenen Ausführungsformen vergleichbar, so daß im folgenden nur noch die Abweichungen näher erläutert werden sollen. Auch die Materialien und Herstellungsverfahren der einzelnen Ausführungsformen der erfindungsgemäßen Ausgabekanüle sind jeweils entsprechend.

Im Gegensatz zur zuvor beschriebenen Ausführungsform ist die Stellachse S der Ausgabekanüle 51 nicht mehr quer zur Strömungsrichtung des Fluids durch die Ausströmleitung, sondern parallel hierzu ausgebildet. Vorzugsweise ist die Mittelachse der Ausströmleitung zugleich die Stellachse des Stellkernes 56.

Der Stellkern 56 ist Teil einer Verbindungsvorrichtung 55, deren Stellhülse 57 integral mit dem Grundkörper 51a der Ausgabekanüle 51 ausgebildet ist. Vorzugsweise ist die Stellhülse 57 als zylinderförmige Ausnehmung an der Stirnseite des Grundkörpers 51a an dessen freiem Ende ausgebildet, das der Teilungsstelle T gegenüberliegt.

Die in dem Grundkörper 51a ausgebildete Ausströmleitung 52 ist von der ebenfalls darin ausgebildeten und parallel zur Ausströmleitung angeordneten Rückführleitung 53 durch einen Trennwandabschnitt 51b abgeteilt. Vorzugsweise sind beide Leitungen als Rohrleitungen mit kreisrundem Querschnitt ausgeführt, andere Ausbildungen, z.B. eine konzentrische Anordnung, sind ebenfalls denkbar.

In dem beschriebenen Ausführungsbeispiel endet hierbei die Ausströmleitung 52 direkt in der zylinderförmigen Ausnehmung 58, in die der Stellkern 56 drehbeweglich um die Stellachse S, aber fluiddicht, eingepaßt ist. Vorzugsweise endet die Ausströmleitung in der Mitte der Bodenfläche der zylindrischen Ausnehmung 58. An einer Seite der Mantelfläche der zylindrischen Ausnehmung 58 endet die Rückführleitung 53, die im Bereich der Stellvorrichtung 55 um 90° zur Ausströmleitung hin abgewinkelt ausgebildet ist.

In dem Stellkern 56 selber ist ein L-förmiger Kanal 59 ausgebildet, der sich von einer Öffnung an der Basisfläche des zylindrischen Stellkerns 56 am Mündungspunkt der Ausströmleitung 52 zur Austrittsöffnung 4 hin erstreckt, die an der Mantelfläche des zylindrischen Stellkerns 56 ausgebildet ist.

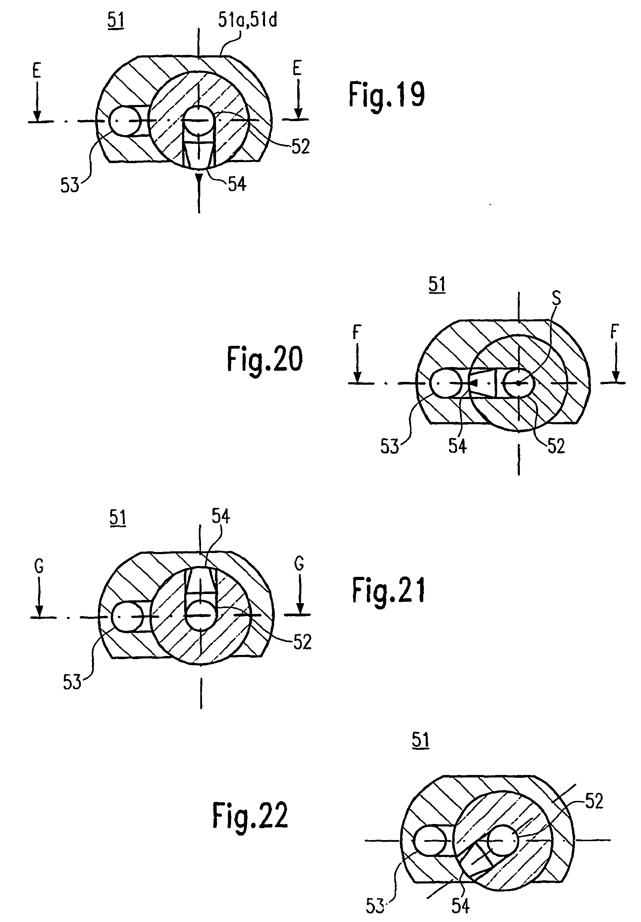

In einer in den Fig. 17 und 20 dargestellten Rückführbetriebsstellung decken sich die Mündungsöffnung der Rückführleitung 53 und die Austrittsöffnung 54 des Kanales 59. Die Rückführbetriebsstellung ist, wie in Fig. 20 gezeigt, von der Ausgabebetriebsstellung, wie sie n den Fig. 16 und 19 gezeigt ist, dadurch zu erreichen, daß der Stellkern 56 um 90° im Uhrzeigersinn gedreht wird. Bei einer weiteren Drehung um 90° wird eine Verschlußstellung erreicht, wie sie in den Fig. 18 und 21 gezeigt ist. Eine alternative Verschlußstellung ist in Fig. 22 gezeigt, wobei der Stellkern 56 nur um 45° gegenüber der Ausgabebetriebsstellung im Uhrzeigersinn gedreht wurde.

Auch bei dieser anhand der Fig. 16 bis 22 beschriebenen fünften Ausführungsform weist die erfindungsgemäße Ausgabekanüle weder ein internes noch ein externes Totvolumen auf. Vorteilhaft ist hierbei, wie auch bei den bereits zuvor beschriebenen Ausführungsformen, daß in der Verschlußstellung Ausströmleitung und Rückführleitung abgedichtet und gegenüber einem Austreten von Fluid gesichert sind.

Diese Ausführungsform eignet sich aufgrund ihrer Kompaktheit insbesondere für Dosiervorrichtungen zum Dosieren von kleinen Mengen. Selbstverständlich kann diese Ausführungsform, wie alle anderen auch, in unterschiedlichen Größen ausgebildet werden, so daß unterschiedliche Leitungsdurchmesser und Ausströmquerschnitte je nach den jeweiligen Anforderungen, ausgebildet werden können.

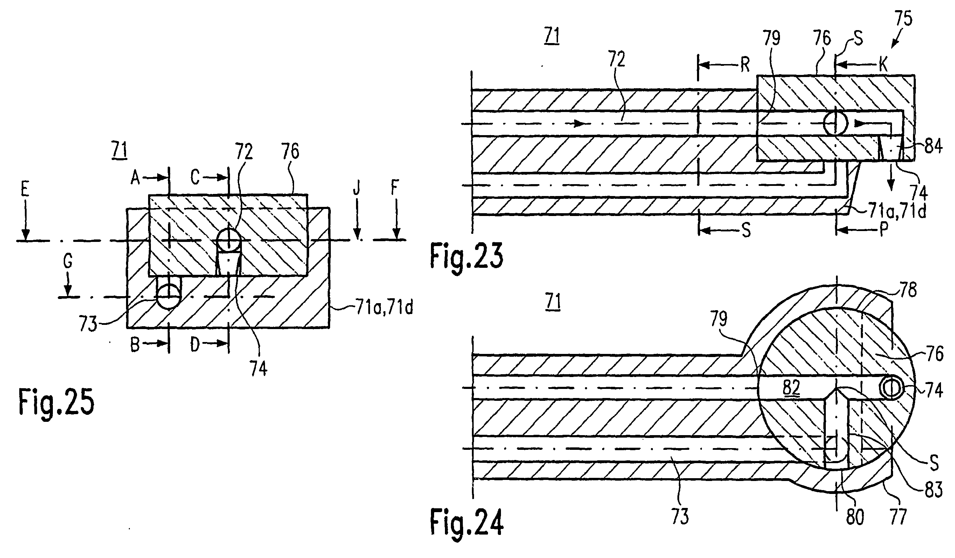

Eine sechste, abgewandelte Ausführungsform einer Ausgabekanüle 71 ist in den Fig. 23 bis 31 dargestellt.

Die nicht dargestellten bzw. nicht näher beschriebenen Einzelheiten hiervon entsprechen wiederum den zuvor beschriebenen Ausführungsbeispiele einer Ausgabekanüle, insbesondere kann deren Grundkörper 71a wieder ein- oder mehrteilig ausgeführt sein, wie zuvor beschrieben.

Hierbei ist auch zu bemerken, daß die Wechselteile 1d, 51d, 71d und 101d der jeweiligen Ausführungsformen von Ausgabekanülen entweder direkt oder über passende Ansatzstücke mit einem einheitlichen Basisteil 1c des Grundkörpers 1a der erfindungsgemäßen Ausgabekanüle verbunden werden können, wobei das Basisteil 1c fest mit einem Ventilblock 35 einer Dosiervorrichtung verbunden oder integral mit diesem ausgeführt ist.

Das Basisteil 1c der erfindungsgemäßen Ausgabekanüle 1 weist hierbei, wie zuvor bereits beschrieben, an seiner offenen Seite einen Trennwandabschnitt 1c auf, an dem alle Varianten von Wechselteilen der erfindungsgemäßen Ausgabekanüle angedockt bzw. ausgetauscht werden können.

Auch kann an diese Befestigungsmöglichkeit zunächst ein weiteres ganz normales Kanülenendteil angedockt werden, insbesondere ein solches, das die Rückführleitung abdichtet und nur einen Fluiddurchfluß durch die Ausströmleitung hin zu einer Austrittsöffnung ermöglicht. In einem solchen Kanülenendteil kann eine Absperrvorrichtung vorgesehen sein, jedoch ist dies nicht zwingend.

Die Fig. 23 bis 25 zeigen die sechste Ausführungsform einer Ausgabekanüle 71 in einer Ausgabebetriebsstellung.

In einem Grundkörper 71a, 71d der Ausgabekanüle 71, der einteilig oder mehrteilig ausgebildet sein kann und insbesondere ein Basisteil 1c und ein Wechselteil 71d umfassen kann, sind in einer vertikalen Ebene einer Ausströmleitung 72 und eine Rückführleitung 73 parallel zueinander ausgebildet. Am freien Ende der Ausgabekanüle 71 ist eine Stellvorrichtung 75 mit einer Stellhülse 77 und einem darin drehbar aber fluiddicht gelagerten Stellkern 76 ausgebildet.

Der Stellkern 76 dreht sich hierbei um eine vertikale Stellachse S, die vorzugsweise die Mittellinie der Ausströmleitung 72 schneidet. In dem Stellkern 76 sind drei Kanäle 82, 83, 84 ausgebildet, wobei sich der erste Kanal 82 in der Ausgabebetriebsstellung in Verlängerung der Ausströmleitung 72 horizontal erstreckt. An seinem Ende geht er in einen vertikalen Kanal 84 über, der an der Ausströmöffnung 74 endet, die an der Unterseite des zylindrischen Stellkörpers 76 in dessen Basisfläche ausgebildet ist.

Etwa auf halber Strecke zwischen dem Beginn des ersten Kanals 82 (Eintrittsöffnung 79 an einer Seite der Mantelfläche des zylindrischen Stellkörpers 76) und dem Übergang des ersten Kanals 82 in den vertikalen Kanal 84 zweigt von dem horizontalen Kanal 82 ein horizontaler Querkanal 83 ab, der an einer anderen Seite in der Mantelfläche des zylindrischen Stellkörpers 76 an einer zweiten Öffnung 80 mündet.

In der in den Fig. 23 bis 25 gezeigten Ausgabebetriebsstellung des Stellkörpers 76 wird diese Öffnung 80 durch die Innenseite der Stellhülse 77 abgedichtet und die Mündung der Rückführleitung 73 in den Hohlraum 78 der Stellhülse 77 wird durch die Basisfläche des Stellkernes 76 ebenfalls fluiddicht verschlossen.

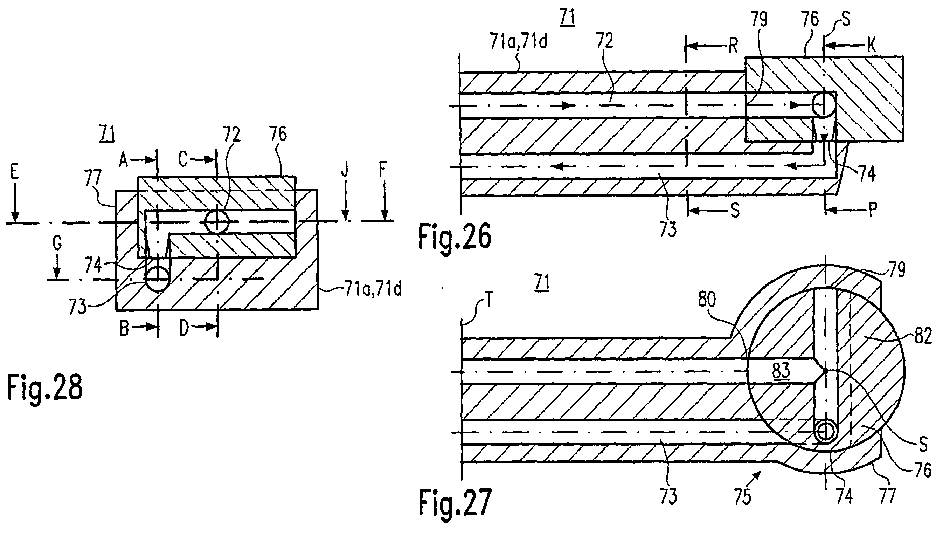

Die Fig. 26 bis 28 zeigen die Ausgabekanüle 71 in einer Rückführbetriebsstellung, bei der der Stellkern 76 um 90° im Uhrzeigersinn gedreht ist.

In dieser Stellung liegt die Öffnung 80 des zweiten horizontalen Kanals 83 an der Öffnung der Ausströmleitung in den Hohlraum 78 der Stellhülse 77, so daß Fluid von der Ausströmleitung in den Kanal 83 fließen kann. Während die erste Öffnung 79 des ersten horizontalen Kanals 82 durch die Innenseite der Stellhülse 7 abgedichtet und verschlossen ist, liegt die Austrittsöffnung 74 des vertikalen Kanales 84 gegenüber der Eintrittsöffnung der Rückführleitung 73, so daß Fluid über die Kanäle 83, 82 und 84 von der Ausströmleitung 72 in die Rückführleitung 73 gelangen kann.

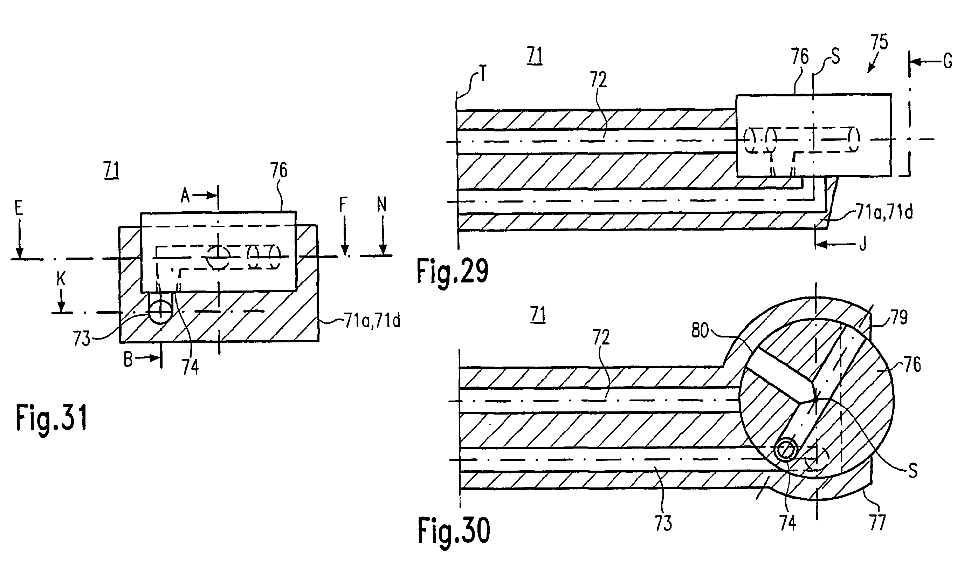

Die Fig. 29 bis 31 zeigen die Ausgabekanüle 71 in einer Verschlussstellung, in der die Eintrittsöffnung der Ausströmleitung 72 in den Hohlraum 78 der Verbindungsvorrichtung 75 durch die Mantelfläche des Stellkernes 76 abgedichtet wird, die Eintrittsfläche der Rückströmleitung 73 durch die untere Basisfläche des Stellkernes 76 abgedichtet wird, und bei der die Öffnungen 79, 80 und die Austrittsöffnung 74 ebenfalls durch die Innenseite der Stellhülse 77 abgedichtet werden, so daß ein Austritt von Fluid oder ein Eintrocknen desselben verhindert wird.

Auch bei dieser Ausführungsform existiert kein externes Totvolumen. Eine Absperrung erfolgt bereits nach einer Drehung von ca. 30°, bezogen auf die Ausströmbetriebsstellung. Die Ausströmleitung und die Rückführleitung sind parallel zueinander in dem Grundkörper 71a angeordnet, jedoch horizontal und vertikal zueinander versetzt.

Im Bereich der Teilungsstelle T des Wechselteils 71d des Grundkörpers 71a der Ausgabekanüle 1 sind vorzugsweise Übergangskanäle angeordnet, die die Leitungsöffnungen in eine Position verlegen, in der beide Leitungen in einer Vertikalebene zu liegen kommen, so daß das Wechselteil 71d direkt an ein Basisteil 1c der Ausgabekanüle anschließbar ist.

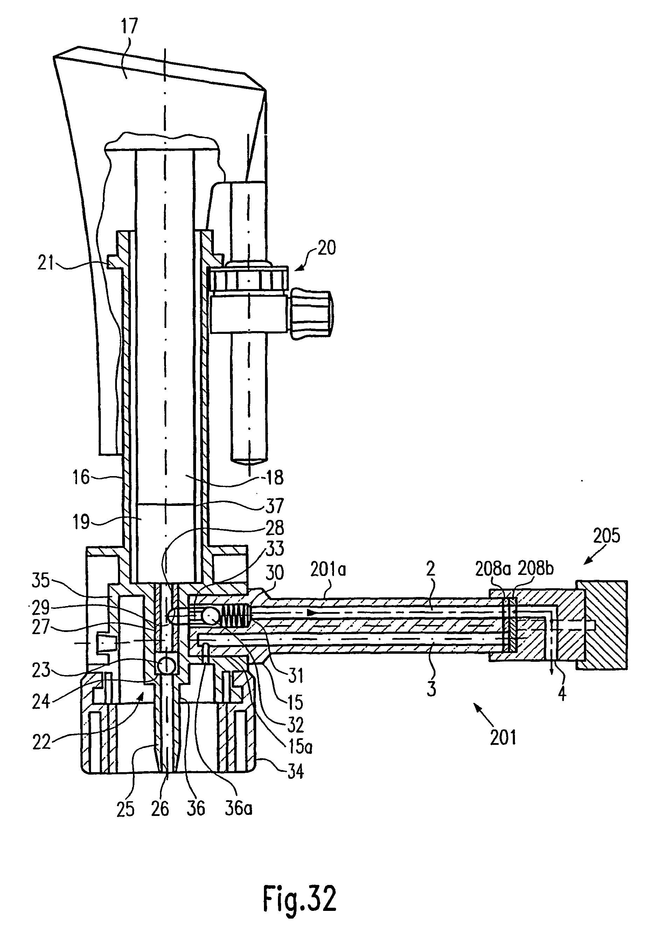

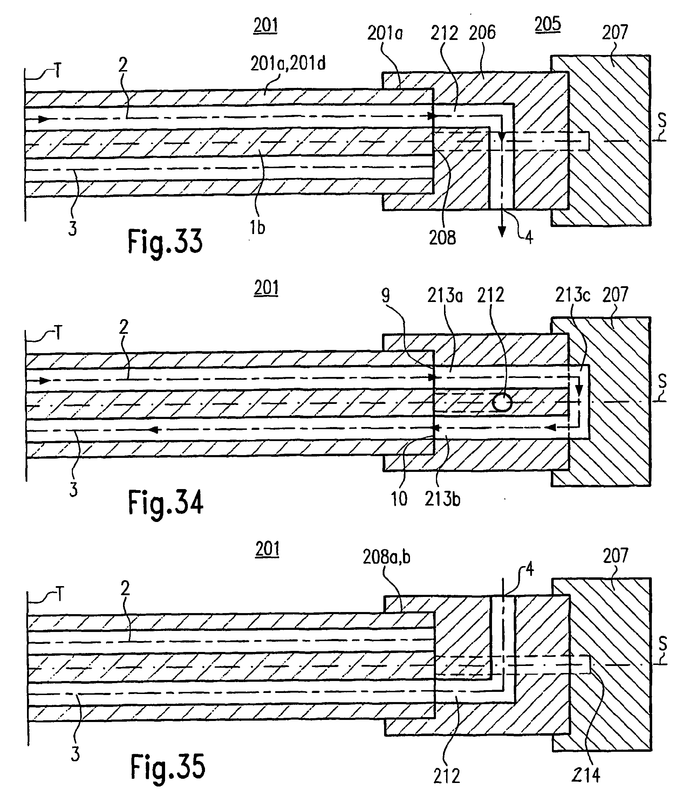

In Fig. 32 - 35 ist ein siebtes Ausführungsbeispiel der erfindungsgemäßen Vorrichtung zur Ausgabe einer Flüssigkeit in Form eines Dosier-Dispensers mit integral ausgebildetem Förder- bzw. Dosierzylinder und einer Ausgabekanüle mit integral eingeformter Rückführleitung dargestellt. Gleiche Teile oder solche mit entsprechender Funktion tragen hierbei gleiche oder entsprechende Bezugszeichen, wie in der vorangehend beschriebenen Ausführungsform und weisen entsprechende Vorzüge auf. Die Ausgabekanüle 201 ist hierbei in einer bevorzugten Ausführungsform in den Fig. 33 bis 35 in verschiedenen Betriebsstellungen gezeigt.

Die in den Fig. 32 bis 35 dargestellte Ausgabekanüle 201 umfaßt einen Grundkörper 201 a, der vorzugsweise aus einem Kunststoffmaterial gefertigt ist, jedoch sind auch andere geeignete Materialien, insbesondere z.B. Metalle, Keramik etc. denkbar. In dem Grundkörper 201a der Ausgabekanüle 201 sind sowohl eine Ausströmleitung 2 als auch eine Rückführleitung 3 ausgebildet. Die Ausströmleitung 2 und die Rückführleitung 3 sind durch einen Trennwandabschnitt 1b, der einstückig mit dem Grundkörper 201a ausgebildet ist, voneinander getrennt. Sowohl die Ausströmleitung 2 als auch die Rückführleitung 3 weisen vorzugsweise einen kreisförmigen Querschnitt auf und enden bei der hier dargestellten ersten Ausführungsform an einer Stimfläche einer Stellvorrichtung 205. Andere Querschnittsformen der Leitungen bzw. Kanäle sind ebenso denkbar.

Das Stellelement 205 verlängert als Teil der Ausgabekanüle 201 den Grundkörper 201a in seiner Längsrichtung. Es ist hierbei drehbar bezüglich einer Längsachse des Grundkörpers 201 a, die sich in einer Stellachse S der Stellvorrichtung 205 fortsetzt. Hierbei ist die Stellvorrichtung 205 gegen Abfallen gesichert an dem Grundkörper 201a angelenkt, so daß zwischen den sich berührenden Stirnflächen des Grundkörpers und der Stellvorrichtung 205 eine fluiddichte drehbewegliche Verbindung entsteht. Dies geschieht z.B. durch formschlüssiges Aufschnappen einer Nut auf einen Vorsprung, die entlang eines Übergriffsbereiches 201a an den Mantelflächen des Grundkörpers 201a und des STellelementes 205 ausgebildet sind.

Um eine besonders leichtgängige Bewegung der Stellvorrichtung relativ zu dem Grundkörper 201a zu ermöglichen, und um ferner eine zuverlässige Abdichtung der Eintrittsmündung der Rücklaufleitung 3 zu ermöglichen, sind zwischen der Stellvorrichtung 205 und dem Grundkörper 201a vorzugsweise zwei Gleitscheiben 208a, 208b vorgesehen, wie sie in Fig. 32 dargestellt sind, und die über die Stellvorrichtung 205 und eine hier nicht näher dargestellte Eingriffsstruktur zwischen der Stellvorrichtung 205 und dem Grundkörper 201a in enger Lage an die Stirnfläche des Grundkörpers 201a gehalten sind.

Die Gleitscheiben 208a, 208b sind vorzugsweise aus einem Glas-, Kunststoff- oder Keramikmaterial gebildet und mit Durchgangsöffnungen versehen, die je nach Position der Stellvorrichtung 205 in Deckung bringbar sind.

Die Stellvorrichtung 205 ist bei der hier dargestellten Ausführungsform wie folgt aufgebaut. Sie umfaßt im wesentlichen aus fertigungstechnischen Gründen zwei Grundbauteile, den Stellkern 206 und das Stellglied 207. Der Stellkern 206 ist, abgesehen von den darin ausgebildeten Kanälen im wesentlichen rotationssymmetrisch bezüglich der Stellachse S aufgebaut. Parallel zu dieser erstrecken sich in Längsrichtung des Stellkernes 206 zwei parallele Kanäle, die Schenkel 213a und 213b des Rückführkanales 213 durch den Grundkörper 206 der Länge nach hindurch. Der Abstand dieser Kanäle und die Anordnung entspricht dem Abstand und der Anordnung der Ausströmleitung 2 und der Rückführleitung 3, so daß die jeweiligen Stirnseiten der Leitungen 2, 3 und der Schenkel 213a, 213b an ihren Berührstellen, den Durchflußöffnungen 9 und 10 aufeinandertreffen.

Zwischen den beiden parallelen Schenkeln 213a, 213b des Rückführkanales 213 ist, wie beispielsweise in Fig. 34 dargestellt, ein weiterer Kanal, der Austrittskanal 212 ausgebildet. Hierbei erstreckt sich der Austrittskanal 212 in einer Ebene, die senkrecht zu der Ebene ist, in der die beiden Schenkel 213a, 213b des Rückführkanales 213 angeordnet sind. Der Austrittskanal 212 ist, wie in Fig. 33 dargestellt, im wesentlichen L-förmig ausgebildet, wobei ein erster Schenkel parallel zu den beiden Schenkeln 213a, 213b des Rückführkanales ausgebildet ist und vorzugsweise möglichst kurz ausgebildet ist, um hierdurch das nicht spülbare Totvolumen möglichst zu reduzieren. Auch ist denkbar, daß dieser Schenkel nicht ausgebildet ist bzw. das die Länge dieses Schenkels lediglich dem Durchmesser eines zweiten Schenkels entspricht.

Der zweite Schenkel des Austrittskanales 212, dessen Mittelachse senkrecht zur Achse der Kanäle 2, 3 sowie zur Stellachse S steht, führt von dem ersten Schenkel zur Austrittsöffnung 4 ins Freie. Im Extremfall ist der erste Schenkel des Austrittskanals 212 so kurz ausgebildet, daß sich der zweite Schenkel, der zur Austrittsöffnung 4 führt, direkt an der Stirnseite 208 bzw. den Gleitscheiben 208a, 208b rohr- oder kanalförmig (eine Kanalseite wird durch die Gleitscheibe 208b gebildet) ausgebildet ist. Hierdurch wird ein besonders geringes Totvolumen im Austrittskanal 212 erreicht.

Das Stellglied 207 schließt sich an die im Grundkörper 201a abgewandte Seite des Stellkernes 206 an und dichtet die beiden Schenkel 213a, 213b nach außen hin ab.

Anschließend an die dem Grundkörper 201a abgewandten Öffnungen der Schenkel 213a, 213b des Rückführkanales 213 ist in dem Stellglied 207 ein U-förmig oder vorzugsweise schlitzförmiger Verbindungskanal 213c ausgebildet, wodurch eine Strömungsverbindung zwischen den beiden Schenkeln 213a, 213b hergestellt wird. Dieser Verbindungskanal kann jedoch auch als Bohrung ausgebildet sein, die konzentrisch zur Stellachse S angeordnet ist und deren Außendurchmesser dem Außenabstand der beiden Schenkel 213a, 213b entspricht, wodurch sich jedoch auch das Volumen des Rückführkanales 213 erhöht.

Selbstverständlich kann die Stellvorrichtung 205 auch einstückig ausgebildet sein, insbesondere indem die Kanäle nicht nachträglich eingebohrt, sondern eingegossen werden. Hierbei ist in der Stellvorrichtung 205 sodann ein längerer Rückführkanal 213 ausgebildet, über welchen das umgelenkt und wieder in diesen zurückgeführt wird, sowie ein kürzerer Ausströmkanal 212, über den das aus dem Grundkörper 201a der Ausgabekanüle austretende Flüssigkeit ins Freie ausgegeben werden kann.

Bei der in Fig. 34 dargestellten Funktionsposition der Stellvorrichtung 205 überbrückt diese die Ausströmleitung 2 und die Rückführleitung 3 und ermöglicht dadurch den vereinfacht durch die Pfeile angedeuteten Flüssigkeitsstrom von dem Förder- bzw. Dosierzylinder 35 zurück in einen hier nicht dargestellten Behälter bzw. vergleichbare Sammeleinrichtung. Dadurch wird es beispielsweise möglich, eine größere Flüssigkeitsmenge über den Förder- bzw. Dosierzylinder 35 und durch die Ausgabekanüle 201 hindurch zu fördern, wodurch sichergestellt ist, daß sich in der Ausgabekanüle 201 kein mittlenrueile veraltetes oder beispielsweise durch Trocknung hinsichtlich seiner Konzentration veränderte Flüssigkeit befindet. Dies kann insbesondere dadurch vorgenommen werden, daß Luft durch die Ausgabekanüle gepumpt wird.

Auf einer der Stimfläche 208 abgewandten Seite des Grundkörpers 201a ist die Ausgabekanüle 201 mit einem Befestigungsabschnitt 15 versehen, über welchen die Ausgabekanüle 201 an einem hier durch das Bezugszeichen 35 bezeichneten Ventilblock anbringbar ist. Der Befestigungsabschnitt 15 umfaßt bei der hier dargestellten Ausführungsform einen im wesentlichen zylindrischen Einpreßzapfenabschnitt 15a, der in enger Passung, abdichtend in eine entsprechend ausgebildete Paßbohrung des Ventilblocks 35 eingepreßt ist.

Alternativ zu der dargestellten Ausführungsform des Befestigungsabschnittes 15 ist es auch möglich, die Ausgabekanüle 1 integral mit dem Ventilblock auszubilden oder beispielsweise über eine Gewindeeinrichtung mit dem Ventilblock 35 zu verbinden. Die Gewindeeinrichtung ist mit Vorteil derart gestaltet, daß im festgezogenen Zustand zwischen den Gewindeflanken kein Hohlraum verbleibt. Dies kann insbesondere durch ein schwach konisches Gewinde erreicht werden. Ebenso kann die Ausgabekanüle, wie bereits anhand des ersten Ausführungsbeispiels beschrieben, mehrteilig ausgebildet sein.

Bei der hier dargestellten siebten Ausführungsform sind die Ausströmleitung 2 und die Rückführleitung 3 in nebeneinanderliegender Weise ausgebildet. Es ist auch möglich, die Ausströmleitung 2 und die Rückführleitung 3 übereinander oder zueinander koaxial auszubilden, so daß eine der beiden Leitungen durch einen entsprechend dimensionierten Ringraum gebildet ist. Die Rückführleitung 3 erstreckt sich durchgängig ununterbrochen von der Austrittsöffnung der Ausströmleitung 2 zurück zu dem Ventilblock 35.

Selbstverständlich sind weitere Ausführungsformen, die eine Abwandlung der dargestellten und beschriebenen Ausführungsformen verkörpern, jederzeit denkbar. Bei derartigen Abwandlungen kann ein wesentliches Merkmal sein, daß die Austrittsöffnung 4, 104, die in Verbindung mit einer Ausströmleitung 2 steht, auch in einem Rückführbetriebszustand strömungsdurchflossen ist, und somit einen Teil des Rückführsystems, also der Verbindung zur Rückführleitung, darstellt. Auch können die ausführungsformen untereinander kombiniert werden.

Die Erfindung ist nicht auf die vorangehend beschriebenen Ausführungsformen beschränkt. Beispielsweise ist es auch möglich, insbesondere bei einer Ausführungsform der Ausgabekanüle mit koaxial angeordneten Kanälen die Stellvorrichtung in die Ausgabekanüle einzustecken. Es ist auch möglich, die Stellvorrichtung als von der Ausgabekanüle abnehmbare Kappe auszugestalten, und beispielsweise eine Reinigung der Einzelteile von Flüssigkeitsrückständen zu ermöglichen.

## Patentansprüche

1. Flüssigkeitsdispenser, insbesondere Dosierspender, mit einer Fördereinrichtung mit einem Förder- oder Dosierzylinder, einem darin bewegbaren Förder- oder Dosierkolben zum Fördern der Flüssigkeit aus einem Behälter zu einer Ausströmleitung, zur Ausgabe der Flüssigkeit über eine Austrittsöffnung der Ausströmleitung, wobei in einer Ausgabekanüle (1, 51, 51, 101,201) die Ausströmleitung (2, 52, 72, 102) und entlang derselben eine Rückführleitung (3, 53, 73, 103) gebildet sind, **gekennzeichnet durch** eine Verbindungsvorrichtung (5, 55, 75, 105, 205), die eine Austrittsöffnung (4, 54, 74, 104) der Ausströmleitung (2, 52, 72, 102) enthält, und **durch** die die Austrittsöffnung (4, 54, 74, 104) mit der Rückführleitung (3, 53, 73, 103) verbindbar ist.

2. Flüssigkeitsdispenser nach Anspruch 1, **dadurch gekennzeichnet, daß** die Ausgabekanüle (1, 51, 71, 101, 201) mit einem Ventilblock (35) verbunden ist, und daß in dem Ventilblock (35) ein Flüssigkeitszuführkanal (26), verbunden mit der Ausströmleitung (2, 52, 72, 102), und ein Flüssigkeitsrücklaufkanal (36), verbunden mit der Rücklaufleitung (3, 53, 73, 103), vorgesehen sind.

3. Flüssigkeitsdispenser nach Anspruch 1 oder 2, **dadurch gekennzeichnet, daß** die Ausgabekanüle (1, 51, 71, 101, 201) in den Ventilblock (35) eingepreßt ist.

4. Flüssigkeitsdispenser nach zumindest einem der Ansprüche 1 bis 3, **dadurch gekennzeichnet, daß** die Ausgabekanüle (1, 51, 71,101,201) mittels einer lösbaren Verbindung, insbesondere einer Gewinde-Einschraubverbindung oder eine Bajonett-Verbindung, mit dem Ventilblock (35) verbindbar ist.

5. Flüssigkeitsdispenser nach einem der Ansprüche 1 bis 4, **dadurch gekennzeichnet, daß** die Ausgabekanüle (1,51,71,101, 201) ein mit dem Ventilblock (35) koppelbares Basisteil (10) und zumindest ein daran koppelbares, vorzugsweise austauschbares, Wechselteil (1d,51d,71d,101d, 201 d) aufweist.

6. Flüssigkeitsdispenser nach Anspruch 5, **dadurch gekennzeichnet, daß** das Basisteil (10) eine integrierte Ausströmleitung (2,52,72,102) zur Abgabe einer Flüssigkeit über die Austrittsöffnung (4,54,74,104) und eine integrierte Rückführleitung (3,53,73,103) aufweist, die sich entlang der Ausströmleitung (2,52,72,102) erstreckt.

7. Flüssigkeitsdispenser nach Anspruch 5 oder 6, **dadurch gekennzeichnet, daß** das Wechselteil (1d,51d,71d,101d, 201d) zumindest eine Austrittsöffnung (4,54,74,104) aufweist, die mit der Ausströmleitung (2,52,72,102) des Basisteils (1c) in Fluidverbindung bringbar ist.

8. Flüssigkeitsdispenser nach zumindest einem der Ansprüche 1 bis 7, **dadurch gekennzeichnet, daß** der Förder- bzw. Dosierzylinder (37) einstückig mit dem Ventilblock (35) ausgebildet, insbesondere ein einstückig mit Kunststoff umspritzter Zylinder, vorzugsweise Glaszylinder, ist.

9. Flüssigkeitsdispenser nach zumindest einem der Ansprüche 1 bis 8, **dadurch gekennzeichnet, daß** der Förder- bzw. Dosierzylinder (37) in den Ventilblock (35) eingeschraubt ist.

10. Flüssigkeitsdispenser nach zumindest einem der Ansprüche 2 bis 9, **dadurch gekennzeichnet, daß** der Förder- bzw. Dosierzylinder (37) einen aus einen Glas-, Keramik-, thermoplastischen oder duroplastischen Kunststoffmaterial gebildeten Zylinder-Einsatz umfaßt, der in einem einstückig mit dem Ventilblock (35) ausgebildeten Mantelabschnitt (16) aufgenommen, insbesondere eingespritzt ist.

11. Flüssigkeitsdispenser nach zumindest einem der Ansprüche 1 bis 10, **dadurch gekennzeichnet, daß** der Ventilblock (35) als Skelettkonstruktion mit beabstandeten Stegen ausgebildet ist.

12. Flüssigkeitsdispenser nach Anspruch 11, **dadurch gekennzeichnet, daß** der Ventilblock (35) mit einer Aufnahmeausnehmung versehen ist zur Aufnahme eines Fußabschnittes der Ausgabekanüle (1, 51, 71, 101, 201), wobei die Aufnahmeausnehmung an dem Ventilblock (35) einen sich in einer Axial-Ebene erstreckende Steg radial durchsetzt.

13. Flüssigkeitsdispenser nach zumindest einem der Ansprüche 1 bis 12, **dadurch gekennzeichnet, daß** eine Ausgabekanülen-Positioniereinrichtung vorgesehen ist zur Festlegung der Position der Ausgabekanüle (1, 51, 71, 101, 201) an dem Ventilblock (35).

14. Flüssigkeitsdispenser nach Anspruch 13, **dadurch gekennzeichnet, daß** die Ausgabekanülen-Positioniereinrichtung einen ausgabekanülenseitig ausgebildeten Eingriffsabschnitt aufweist, der mit einem ventitblockseitig ausgebildeten Eingriffsgegenabschnitt in Eingriff bringbar ist.

15. Flüssigkeitsdispenser nach zumindest einem der Ansprüche 1 bis 14, **dadurch gekennzeichnet, daß** an dem Ventilblock (35) im Bereich der Aufnahmeausnehmung ein Eingriffsabschnitt ausgebildet ist, der mit einem ausgabekanülenseitig ausgebildeten Eingriffsgegenabschnitt in Eingriff bringbar ist.

16. Ausgabekanülen-Baukastensystem für einen Flüssigkeitsspender, insbesondere für einen Dosierspender, mit einem mit einem Dosierspender koppelbaren Basisteil (1c) und einer Mehrzahl von Wechselteilen (1d, 51d, 71d, 101 d, 201 d) von Ausgabekanülen (1, 51, 71, 101, 201) an denen jeweils zumindest eine Austrittsöffnung (4, 54, 74, 104) ausgebildet ist, wobei das Basisteil (1c) mit jedem der Wechselteile (1d, 51d, 71d, 101d, 201d) in lösbarer Weise koppelbar ist, und zumindest das Basisteil (1c) eine in dieses integrierte, in der Austrittsöffnung (4, 54, 74, 104) mündende Ausströmleitung (2, 52, 72, 102) zur Abgabe einer Flüssigkeit und eine in dieser integrierten Rückführleitung (3, 53, 73, 103) aufweist, die sich entlang der Ausströmleitung (2, 52, 72, 102) erstreckt.

17. Ausgabekanüle, insbesondere für einen Flüssigkeitsdispenser oder ein Ausgabekanülen-Baukastensystem nach zumindest einem der vorhergehenden Ansprüche 1 bis 16, insbesondere Dosierdispenser, mit einer in diese integrierten Ausströmleitung (2, 52, 72, 102) zur Abgabe einer Flüssigkeit über eine Austrittsöffnung (4, 54, 74, 104) und einer in die Ausgabekanüle integrierten Rückführleitung (3, 53, 73, 103), die sich entlang der Ausströmleitung (2, 52, 72, 102) erstreckt, wobei die Austrittsöffnung (4, 54, 74, 104) zur Herstellung einer Verbindung mit der Rückführleitung (3, 53, 73, 103) bewegbar ist.

18. Ausgabekanüle nach Anspruch 17**, dadurch gekennzeichnet, daß** die Austrittsöffnung (4, 54, 74, 104) Teil einer Verbindungsvorrichtung (5, 55, 75, 105, 205) ist.

19. Ausgabekanüle nach Anspruch 17 oder 18, **dadurch gekennzeichnet, daß** die Verbindungsvorrichtung (5, 55, 75, 105, 205) in eine erste Stellung bringbar ist, in der sich die Ausströmleitung (2, 52, 72, 102) in Strömungsverbindung mit der Austrittsöffnung (4, 54, 74, 104) befindet, und in der die Rückführleitung (3, 53, 73,103) durch die Verbindungsvorrichtung (5, 55, 75, 105, 205) nach außen hin verschlossen ist.

20. Ausgabekanüle nach zumindest einem der Ansprüche 17 bis 19, **dadurch gekennzeichnet, daß** die Verbindungsvorrichtung (5, 55, 75,105, 205) in eine zweite Stellung bringbar ist, in der die Ausströmleitung (2, 52, 72, 102) und die Rückführleitung (3, 53, 73, 103) in Strömungsverbindung sind, wobei die Austrittsöffnung (4, 54, 74, 104) der Rückführleitung (3, 53, 73, 103) unmittelbar benachbart ist.

21. Ausgabekanüle nach zumindest einem der Ansprüche 17 bis 20, **dadurch gekennzeichnet, daß** die Verbindungsvonichtung (5, 55, 75, 105, 205) in zumindest eine dritte Stellung bringbar ist, in der die Ausströmleitung (2, 52. 72, 102) und die Rückführleitung (3, 53, 73, 103) jeweils nach außen hin verschlossen sind.

22. Ausgabekanüle nach zumindest einem der Ansprüche 17 bis 21, **dadurch gekennzeichnet, daß** die Verbindungsvorrichtung (5, 55, 75, 105, 205) in eine Stellung bringbar ist, in der die Austrittsöffnung (4, 54, 74, 104) nach außen hin verschlossen ist.

23. Ausgabekanüle nach zumindest einem der Ansprüche 17 bis 22, **dadurch gekennzeichnet, daß** die Ausströmleitung (2, 52, 72, 102) und die Rückführleitung (3, 53, 73, 103) in etwa gleich lang sind, und/oder in etwa den gleichen Durchmesser aufweisen.

24. Ausgabekanüle nach zumindest einem der Ansprüche 17 bis 23, **dadurch gekennzeichnet, daß** die Verbindungsvorrichtung (5, 55, 75, 105) einen Stellkern (6, 56, 76, 106, 206) aufweist, der um eine Stellachse (S) drehbar ist, wobei der Stellkern (6, 56, 76, 106) vorzugsweise in einer Stellhülse (7, 57, 77, 107, 207) angeordnet ist.

25. Ausgabekanüle nach Anspruch 24, **dadurch gekennzeichnet, daß** die Stellhülse (7, 57, 77, 107) als integraler Teil eines Grundkörpers (1a, 51, 71a, 101 a) der Ausgabekanüle (1, 51, 71, 101) ausgebildet ist.

26. Ausgabekanüle nach Anspruch 24 oder 25, **dadurch gekennzeichnet, daß** die Stellhülse (7, 77) einen Hohlraum (8, 78) in ihrem Inneren aufweist, der im wesentlichen vollständig von dem Stellkern (6, 76) ausgefüllt wird, wobei der Hohlraum (8, 78) durch eine erste Öffnung (9, 79) mit der Ausströmleitung (2, 72), durch eine zweite Öffnung (10, 80) mit der Rückführleitung (3, 73) und durch eine dritte Öffnung (11, 81) nach außen hin verbindbar ist.

27. Ausgabekanüle nach zumindest einem der Ansprüche 24 bis 26, **dadurch gekennzeichnet, daß** in dem Stellkern (6, 56, 76, 106, 206) ein oder mehrere Kanäle (12, 13, 14) ausgebildet sind, die miteinander in Strömungsverbindung stehen, wobei zumindest ein Teil eines Kanals (12, 62, 82, 206) in einem Bereich der Stellachse (S) ausgebildet ist.

28. Ausgabekanüle nach zumindest einem der Ansprüche 24 bis 26, **dadurch gekennzeichnet, daß** der Stellkern (6, 56, 76, 106, 206) zumindest teilweise als Rotationskörper bezüglich der Stellachse (S), insbesondere kugel-, kegel-, zylinder- oder torusförmig, oder als Segment oder Teilsegment eines Mantels hiervon, ausgebildet ist.

29. Ausgabekanüle nach zumindest einem der Ansprüche 24 bis 28, **dadurch gekennzeichnet, daß** die Stellachse (S) im wesentlichen senkrecht zur Längsrichtung der Ausströmleitung (2, 72) verläuft.

30. Ausgabekanüle nach zumindest einem der Ansprüche 24 bis 29, **dadurch gekennzeichnet, daß** die Stellhülse (7,57,77,107) in einer Ebene, in der zumindest eine Leitung (2, 52, 72, 102,3) und/oder ein Kanal (12, 13, 14) angeordnet ist, im wesentlichen einen kreisringförmigen oder kreisringsegmentförmigen Querschnitt aufweist, der vorzugsweise an einer Seite abgeflacht ausgebildet ist.

31. Ausgabekanüle nach zumindest einem der Ansprüche 27 bis 30, **dadurch gekennzeichnet, daß** die Austrittsöffnung (4, 54, 74, 104) beweglich, insbesondere drehbeweglich gegenüber einem Grundkörper (1a, 51a, 71a, 101a, 201a) der Ausgabekanüle (1, 51, 71, 101, 201) ausgebildet ist.

32. Ausgabekanüle nach zumindest einem der Ansprüche 17 bis 31, **dadurch gekennzeichnet, daß** die Ausgabekanüle (1, 51, 71, 101, 201) quer zur Längsachse der Ausströmleitung (2, 52, 72, 102) in zumindest ein Basisteil (1 c) und ein Wechselteil (1 d, 51d, 71d, 101d, 201 d) teilbar ausgebildet ist.

33. Ausgabekanüle nach zumindest einem der Ansprüche 24 bis 32, **dadurch gekennzeichnet, daß** die Stellachse (S) im wesentlichen parallel zur Längsrichtung der Ausströmleitung (2, 52, 102) verläuft.

34. Ausgabekanüle nach zumindest einem der Ansprüche 17 bis 33, **dadurch gekennzeichnet, daß** ein Leitungsabschnitt (2a) der Ausströmleitung (2) flexibel ausgebildet ist.

35. Ausgabekanüle, insbesondere Flüssigkeitsspender oder ein Ausgabekanülen-Baukastensystem nach zumindest einem der vorhergehenden Ansprüche 1 bis 34, insbesondere Dosierspender, mit einer integrierten Ausströmleitung (2, 52, 72, 102) zur Abgabe einer Flüssigkeit über eine Austrittsöffnung (4, 54, 74, 104) und mit einer integrierten Rückführleitung (3, 53, 73, 103), die sich entlang der Ausströmleitung (2, 52, 72, 102) erstreckt, wobei die Austrittsöffnung (4, 54, 74, 104) sowohl in einem Spenderbetriebszustand, bei dem Flüssigkeit durch die Austrittsöffnung (4, 54, 74, 104) ins Freie abgegeben wird, als auch in einem Rückführbetriebszustand, bei dem Flüssigkeit von der Ausströmleitung (2, 52, 72, 102) durch die Austrittsöffnung (4, 54, 74, 104) in die Rückführleitung (3, 53, 73, 103) gefördert wird, in eine Stellung bringbar ist, in der sie von Flüssigkeit durchfliessbar ist.

## Claims

1. A liquid dispenser, in particular a dosing dispenser, comprising a supplying device with a supplying or dosing cylinder, a supplying or dosing plunger movable therein for supplying liquid from a container to an outlet duct, for the delivery of the liquid via an outlet port of the outlet duct, wherein the outlet duct (2, 52, 72, 102) and a return duct (3, 53, 73, 103) extending along the outlet duct are formed in a discharge tubule (1, 51, 51, 101, 201), **characterized by** a connecting device (5, 55, 75, 105, 205) which comprises an outlet port (4, 54, 74, 104) of the outlet duct (2, 52, 72, 102), and by means of which the outlet port is connectable to the return duct (3, 53, 73, 103, 203).

2. Liquid dispenser according to Claim 1, **characterized in that** the discharge tubule (1, 51, 51, 101, 201) is connected to a valve block (35), **in that** a liquid feed channel (26) being connected to the outlet duct (2, 52, 72, 102) and a liquid return channel (36) being connected to the return duct (3, 53, 73, 103) are provided in the valve block (35).

3. Liquid dispenser according to Claim 2 or 2 **characterized in that**, the discharge tubule (1, 51, 51, 101, 201) is press-fitted into the valve block (35).

4. Liquid dispenser according to at least one of the Claims 1 to 3, **characterized in that** the discharge tubule (1, 51, 51, 101, 201) is connectable to the valve block (35) by means of a releasable connection, in particular one of a threaded screw-in connection and/or a bayonet connection.

5. Liquid dispenser according to one of the Claims 1 to 4, **characterized in that characterized in that** the discharge tubule (1, 51, 51, 101, 201) comprises a base part (1c) which is connectable to the valve block (35), and at least one exchangeable change part (1d, 51d, 71d, 101d, 201d) which can be coupled to the base part (1c).

6. Liquid dispenser according to Claim 5, **characterized in that** the base part (1c) comprises an integrated outlet duct (2, 52, 72, 102) for the delivery of a liquid via the outlet port (4, 54, 74, 104) and an integrated return duct (3, 53, 73, 103) which extends along the outlet duct (2, 52, 72, 102).

7. Liquid dispenser according to Claim 5 or 6, **characterized in that** the change part (1d, 51d, 71d, 101d, 201d) comprises at least one outlet port (4, 54, 74, 104) which can be brought into a fluid connection with the outlet duct (2, 52, 72, 102) of the base part (10).

8. Liquid dispenser according to at least on of the Claims 1 to 7, **characterized in that** the supplying or dosing cylinder (37) is formed integrally with the valve block (35), in particular being a cylinder which is integrally extrusion-coated with a synthetic material, preferably being a glass cylinder.

9. Liquid dispenser according to at least one of the Claims 1 to 8, **characterized in that** the supplying or dosing cylinder (37) is screwed into the valve block (35).

10. Liquid dispenser according to at least one of the Claims 2 to 9, **characterized in that** the supplying or dosing cylinder (37) comprises a cylinder insert formed of a glass, a ceramic, a thermoplastic and/or a duroplastic synthetic material, which is accommodated in a jacket section (16) formed integrally with the valve block (35) and which, in particular, is injection moulded.

11. Liquid dispenser according to at least one of the Claims 1 to 10, **characterized in that** the valve block (35) is formed as a skeleton construction with spaced webs.

12. Liquid dispenser according to Claim 11, **characterized in that** the valve block (35) is provided with a holding recess for the accommodation of a base section of the discharge tubule (1a, 51a, 71a, 101a) whereby the holding recess at the valve block (35) passes radially through a web extending in an axial plane.

13. Liquid dispenser according to at least one of the Claims 1 to 12, **characterized in that** a discharge tubule positioning device is provided for defining the position of the discharge tubule (1, 51, 51, 101, 201) on the valve block (35).

14. Liquid dispenser according to Claim 13, **characterized in that** the discharge tubule positioning device comprises an engaging section, formed on the discharge tubule end and which can be brought into engagement with an engaging counter section formed on the valve block end.

15. Liquid dispenser according to at least one of the Claims 1 to 14, **characterized in that** an engaging section is formed on the valve block (35) in the region of the holding recess and can be brought into engagement with an engaging counter section formed on the discharge tubule end.

16. Discharge tubule kit system for a liquid dispenser, in particular a dosing dispenser, comprising a base part (1c) which can be coupled to a liquid dispenser and a number of change parts (1d, 51d, 71d, 101d, 201d) of discharge tubules (1, 51, 51, 101, 201) on which at least one outlet port (4, 54, 74, 104) is formed, respectively, whereby the base part (1c) is connectable in a releasable manner to each of the change parts (1d, 51d, 71d, 101d, 201d), and wherein at least the base part (1c) comprises an integrated outlet duct (2, 52, 72, 102) leading into the outlet port (4, 54, 74, 104) for dispensing a liquid, and an integrated return duct (3, 53, 73, 103) which extends along the outlet duct (2, 52, 72, 102).

17. Discharge tubule, in particular for a liquid dispenser or a discharge tubule kit system, according to at least one of the Claims 1 to 16, in particular dosing dispenser, comprising an outlet duct (2, 52, 72, 102) integrated in the discharge tubule for dispensing a liquid via an outlet port (4, 54, 74, 104) and a return duct (3, 53, 73, 103) integrated in the discharge tubule and extending along the outlet duct (2, 52, 72, 102), wherein the outlet port (4, 54, 74, 104) is movable for generating a connection with the return duct (3, 53, 73, 103).

18. Discharge tubule according to Claim 17, **characterized in that** the outlet port (4, 54, 74, 104) is part of a connecting device (5, 55, 75, 105, 205).

19. Discharge tubule according to Claim 17 or 18, **characterized in that** the connecting device (5, 55, 75, 105, 205) can be brought into a first position, at which the outlet duct (2, 52, 72, 102) is connected for flow to the outlet port (4, 54, 74, 104), and in which the return duct (3, 53, 73, 103) is closed to the outside by the connecting device (5, 55, 75, 105, 205).

20. Discharge tubule according to one of the Claims 17 to 19, **characterized in that** the connecting device (5, 55, 75, 105, 205) can be brought into a second position, in which the outlet duct (2, 52, 72, 102) and the return duct (3, 53, 73, 103) are in fluid connection, wherein the outlet port (4, 54, 74, 104) is directly adjacent to the return duct (3, 53, 73, 103).

21. Discharge tubule according to at least one of the Claims 17 to 20, **characterized in that** the connecting device (5, 55, 75, 105, 205) can be brought into at least a third position, in which the outlet duct (2, 52, 72, 102) and the return duct (3, 53, 73, 103) are closed to the outside, respectively.

22. Discharge tubule according to at least one of the Claims 17 to 21, **characterized in that** the connecting device (5, 55, 75, 105, 205) can be brought into a position in which the outlet port (4, 54, 74, 104) is closed to the outside.

23. Discharge tubule according to at least one of the Claims 17 to 22, **characterized in that** the outlet duct (2, 52, 72, 102) and the return duct (3, 53, 73, 103) have approximately the same length and/or approximately the same diameter.

24. Discharge tubule according to at least one of the Claims 17 to 23, **characterized in that** the connecting device (5, 55, 75, 105, 205) comprises an adjusting core (6, 56, 76, 106, 206), which can be rotated about an adjusting axis (S), wherein the adjusting core (6, 56, 76, 106, 206) is arranged in an adjusting sleeve (7, 57, 77, 107, 207).

25. Discharge tubule according to Claim 24, **characterized in that** the adjusting sleeve (7, 57, 77, 107, 207) is formed as an integral part of one of a base body (1a, 51a, 71a, 101a) of the discharge tubule (1a, 51 a, 71 a, 101 a).

26. Discharge tubule according to Claim 24 or 25, **characterized in that** the adjusting sleeve (7,77) comprises a cavity (8,78) in its interior, which is essentially completely filled by the adjusting core (6, 76), wherein the cavity (8,78) can be connected with the outlet duct (2,72) via a first opening (9,79), with the return duct (3,73) via a second opening (10,80), and towards the outside via a third opening (11,81).

27. Discharge tubule according to at least one of the Claims 24 to 26, **characterized in that** a number of channels (12, 13, 14) is formed in the adjusting core (6, 56, 76, 106, 206), which are in fluid connection with one another, wherein at least a part of a channel (12, 62, 82, 206) is formed in a region of the adjusting axis (S).

28. Discharge tubule according to at least one of the Claims 24 to 26, **characterized in that** the adjusting core (6, 56, 76, 106, 206) is at least partially formed as a rotational body with respect to the adjusting axis (S), in particular having one of a spherical shape, a conical shape, a cylindrical shape, a toroidal shape, a segment of a boundary surface of one of these shapes, and a partial segment of a boundary surface of one of these shapes.

29. Discharge tubule according to at least one of the Claims 24 to 28, **characterized in that** the adjusting axis (S) runs essentially perpendicular to the longitudinal direction of the outlet duct (2,72).

30. Discharge tubule according to at least one of the Claims 24 to 29, **characterized in that** the adjusting sleeve (7, 57, 77, 107, 207) is essentially ring-shaped or ring-segment-shaped in cross-section in a plane in which at least a duct (2, 52, 42, 102, 3) and/or a channel (12, 13, 14) is arranged, wherein, preferably the ring-shaped or ring-segment-shaped adjusting sleeve is flattened on one side.

31. Discharge tubule according to at least one of the Claims 27 to 30, **characterized in that** the outlet port (4, 54, 74, 104) is formed to be movable, in particular in a rotatable manner, with respect to a base body (1a, 51a, 71a, 101a) of the discharge tubule (1, 51, 51, 101, 201).

32. Discharge tubule according to at least one of the Claims 17 to 31, **characterized in that** the discharge tubule (1, 51, 51, 101, 201) is formed to be dividable into at least a base part (1c) and a change part (1d. 51d, 71d, 101d, 201d) in a direction transversely to the longitudinal axis of the outlet duct (2, 52, 72, 102).

33. Discharge tubule according to at least one of the Claims 24 to 32, **characterized in that** the adjusting axis (S) runs essentially parallel to the longitudinal direction of the outlet duct (2, 52, 102).

34. Discharge tubule according to at least one of the Claims 17 to 33, **characterized in that** a duct section (2a) of the outlet duct (2) is formed to be flexible.

35. Discharge tubule, in particular a liquid dispenser or a discharge tubule kit according to at least one of the claims 1 to 34, in particular dosing dispenser comprising an integrated outlet duct (2, 52, 72, 102) for dispensing a liquid via an outlet port (4, 54, 74, 104) and an integrated return duct (3, 53, 73, 103) which extends along the outlet duct (2, 52, 72, 102) wherein the outlet port (4, 54, 74, 104) is movable into a position where liquid can flow there through in a dispensing operating state at which liquid is discharged into the free through the outlet port (4, 54, 74, 104), as well as in a return operating state at which liquid is conveyed from the outlet duct through the outlet port (4, 54, 74, 104) into the return duct (3, 53, 73, 103).

## Revendications

1. Distributeur de liquide, en particulier un distributeur doseur, comprenant :
- un dispositif d'alimentation muni d'un cylindre d'alimentation ou de dosage ;
- un piston d'alimentation ou de dosage déplaçable dans celui-ci pour faire l'alimentation du liquide d'un récipient à une conduite d'écoulement pour la sortie du liquide par l'intermédiaire d'une ouverture de sortie de la conduite d'écoulement,
dans lequel la conduite d'écoulement (2, 52, 72, 102) et le long de celle-ci une conduite de retour (3, 53, 73, 103) sont formées dans une canule de sortie (1, 51, 71, 101, 201),
**caractérisé par** un dispositif de liaison (5, 55, 75, 105, 205) qui contient une ouverture de sortie (4, 54, 74, 104) de la conduite d'écoulement (2, 52, 72, 102) et par l'intermédiaire duquel il est possible de relier l'ouverture de sortie (4, 54, 74, 104) à la conduite de retour (3, 53, 73, 103).

2. Distributeur de liquide selon la revendication 1, **caractérisé en ce que** la canule de sortie (1, 51, 71, 101, 201) est reliée à un bloc de soupapes (35) et **en ce qu'**un canal d'amenée de liquide (26) relié à la conduite d'écoulement (2, 52, 72, 102) et un canal de retour de liquide (36) relié à la conduite de retour (3, 53, 73, 103) sont prévus dans le bloc de soupapes (35).

3. Distributeur de liquide selon la revendication 1 ou 2, **caractérisé en ce que** la canule de sortie (1, 51, 71, 101, 201) est pressée dans le bloc de soupapes (35).

4. Distributeur de liquide selon au moins une des revendications 1 à 3, **caractérisé en ce que** la canule de sortie (1, 51, 71, 101, 201) peut être reliée au bloc de soupapes (35) au moyen d'une liaison détachable, en particulier une liaison à filetage et vissage ou une liaison à baïonnette.

5. Distributeur de liquide selon l'une des revendications 1 à 4, **caractérisé en ce que** la canule de sortie (1, 51, 71, 101, 201) présente une partie de base (10) pouvant être accouplée avec le bloc de soupapes (35) et au moins une partie interchangeable (1d, 51d, 71d, 101d, 201d) pouvant y être accouplée et pouvant de préférence être remplacée.

6. Distributeur de liquide selon la revendication 5, **caractérisé en ce que** la partie de base (10) présente une conduite d'écoulement intégrée (2, 52, 72, 102) pour fournir un liquide par l'intermédiaire de l'ouverture de sortie (4, 54, 74, 104) et une conduite de retour intégrée (3, 53, 73, 103) qui s'étend le long de la conduite d'écoulement (2, 52, 72, 102).

7. Distributeur de liquide selon la revendication 5 ou 6, **caractérisé en ce que** la partie interchangeable (1d, 51d, 71d, 101d, 201d) présente au moins une ouverture de sortie (4, 54, 74, 104) qui peut être amenée en liaison fluidique avec la conduite d'écoulement (2, 52, 72, 102) de la partie de base (1c).

8. Distributeur de liquide selon au moins une des revendications 1 à 7, **caractérisé en ce que** le cylindre d'alimentation ou de dosage (37) est réalisé en un seul tenant avec le bloc de soupapes (35), est en particulier un cylindre en un seul tenant, recouvert de matière de synthèse par extrusion, de préférence un cylindre en verre.

9. Distributeur de liquide selon au moins une des revendications 1 à 8, **caractérisé en ce que** le cylindre d'alimentation ou de dosage (37) est vissé dans le bloc de soupapes (35).

10. Distributeur de liquide selon au moins une des revendications 2 à 9, **caractérisé en ce que** le cylindre d'alimentation ou de dosage (37) comporte un insert de cylindre formé à partir d'un matériau en verre, en céramique, en matière plastique thermoplastique ou thermodurcissable, lequel est logé, en particulier injecté dans un tronçon de gaine (16) réalisé en un seul tenant avec le bloc de soupapes (35).

11. Distributeur de liquide selon au moins une des revendications 1 à 10, **caractérisé en ce que** le bloc de soupapes (35) est réalisé comme construction en ossature avec des barrettes espacées.

12. Distributeur de liquide selon la revendication 11, **caractérisé en ce que** le bloc de soupapes (35) est muni d'un évidement de réception pour recevoir un tronçon de pied de la canule de sortie (1, 51, 71, 101, 201), dans lequel l'évidement de réception sur le bloc de soupapes (35) traverse radialement une barrette s'étendant dans un plan axial.

13. Distributeur de liquide selon au moins une des revendications 1 à 12, **caractérisé en ce qu'**un dispositif de positionnement de canule de sortie est prévu pour définir la position de la canule de sortie (1, 51, 71, 101, 201) sur le bloc de soupapes (35).

14. Distributeur de liquide selon la revendication 13, **caractérisé en ce que** le dispositif de positionnement de canule de sortie présente un tronçon d'engagement réalisé du côté canule de sortie, lequel peut être amené en engagement avec un tronçon d'engagement opposé, réalisé du côté bloc de soupapes.

15. Distributeur de liquide selon l'une des revendications 1 à 14, **caractérisé en ce qu'**un tronçon d'engagement est réalisé sur le bloc de soupapes (35) dans la région de l'évidement de réception, lequel peut être amené en engagement avec un tronçon d'engagement réalisé du côté canule de sortie.

16. Système modulaire à canules de sortie pour un distributeur de liquide, en particulier pour un distributeur doseur, comprenant une partie de base (1c) pouvant être accouplée à un distributeur doseur et une pluralité de parties interchangeables (1d, 51d, 71d, 101d, 201d) de canules de sortie (1, 51, 71, 101, 201) sur chacune desquelles est réalisée au moins une ouverture de sortie (4, 54, 74, 104), dans lequel la partie de base (1c) peut être accouplée de manière détachable avec chacune des parties interchangeables (1d, 51d, 71d, 101d, 201d) et dans lequel au moins la partie de base (1c) présente une conduite d'écoulement (2, 52, 72, 102) intégrée dans ladite partie de base et s'embouchant dans l'ouverture de sortie (4, 54, 74, 104) pour fournir un liquide, et une conduite de retour (3, 53, 73, 103) intégrée dans celle-ci qui s'étend le long de la conduite d'écoulement (2, 52, 72, 102).

17. Canule de sortie, en particulier pour un distributeur de liquide ou un système modulaire à canules de sortie, selon au moins une des revendications précédentes 1 à 16, en particulier un distributeur doseur, comprenant une conduite d'écoulement (2, 52, 72, 102) intégrée en elle pour fournir un liquide par l'intermédiaire d'une ouverture de sortie (4, 54, 74, 104) et une conduite de retour (3, 53, 73, 103) intégrée dans la canule de sortie et s' étendant le long de la conduite d'écoulement (2, 52, 72, 102), dans lequel l'ouverture de sortie (4, 54, 74, 104) peut être déplacée pour établir une liaison avec la conduite de retour (3, 53, 73, 103).

18. Canule de sortie selon la revendication 17, **caractérisée en ce que** l'ouverture de sortie (4, 54, 74, 104) est une partie d'un dispositif de liaison (5, 55, 75, 105, 205).

19. Canule de sortie selon la revendication 17 ou 18, **caractérisée en ce que** le dispositif de liaison (5, 55, 75, 105, 205) peut être amené dans une première position dans laquelle la conduite d'écoulement (2, 52, 72, 102) se trouve en liaison de flux avec l'ouverture de sortie (4, 54, 74, 104) et dans laquelle la conduite de retour (3, 53, 73, 103) est fermée vers l'extérieur par le dispositif de liaison (5, 55, 75, 105, 205) .

20. Canule de sortie selon au moins une des revendications 17 à 19, **caractérisée en ce que** le dispositif de liaison (5, 55, 75, 105, 205) peut être amené dans une seconde position dans laquelle la conduite d'écoulement (2, 52, 72, 102) et la conduite de retour (3, 53, 73, 103) sont en liaison de flux, l'ouverture d'écoulement (4, 54, 74, 104) et la conduite de retour (3, 53, 73, 103) étant directement adjacentes.

21. Canule de sortie selon au moins une des revendications 17 à 20, **caractérisée en ce que** le dispositif de liaison (5, 55, 75, 105, 205) peut être amené dans au moins une troisième position dans laquelle la conduite d'écoulement (2, 52, 72, 102) et la conduite de retour (3, 53, 73, 103) sont fermées chacune vers l'extérieur.

22. Canule de sortie selon au moins une des revendications 17 à 21, **caractérisée en ce que** le dispositif de liaison (5, 55, 75, 105, 205) peut être amené dans une position dans laquelle l'ouverture de sortie (4, 54, 74, 104) est fermée vers l'extérieur.

23. Canule de sortie selon au moins une des revendications 17 à 22, **caractérisée en ce que** la conduite d'écoulement (2, 52, 72, 102) et la conduite de retour (3, 53, 73, 103) ont approximativement la même longueur et/ou présentent approximativement le même diamètre.

24. Canule de sortie selon au moins une des revendications 17 à 23, **caractérisée en ce que** le dispositif de liaison (5, 55, 75, 105) présente un noyau de positionnement (6, 56, 76, 106, 206) qui peut être tourné autour d'un axe de positionnement (S), le noyau de positionnement (6, 56, 76, 106) étant agencé de préférence dans une douille de positionnement (7, 57, 77, 107, 207).

25. Canule de sortie selon la revendication 24, **caractérisée en ce que** la douille de positionnement (7, 57, 77, 107) est réalisée comme partie intégrante d'un corps de base (1a, 51, 71a, 101a) de la canule de sortie (1, 51, 71, 101).

26. Canule de sortie selon la revendication 24 ou 25, **caractérisée en ce que** la douille de positionnement (7, 77) présente dans son intérieur une cavité (8, 78) qui est remplie sensiblement complètement par le noyau de positionnement (6, 76), dans laquelle la cavité (8, 78) peut être reliée à la conduite d'écoulement (2, 72) par une première ouverture (9, 79), à la conduite de retour (3, 73) par une seconde ouverture (10, 80) et vers l'extérieur par une troisième ouverture (11, 81).

27. Canule de sortie selon au moins une des revendications 24 à 26, **caractérisée en ce qu'**un ou plusieurs canaux (12, 13, 14) sont réalisés dans le noyau de positionnement (6, 56, 76, 106, 206), lesquels sont en liaison de flux les uns avec les autres, au moins une partie d'un canal (12, 62, 82, 206) étant réalisée dans une région de l'axe de positionnement (S).

28. Canule de sortie selon au moins une des revendications 24 à 26, **caractérisée en ce que** le noyau de positionnement (6, 56, 76, 106, 206) est réalisé au moins partiellement comme corps de rotation par rapport à l'axe de positionnement (S), en particulier en forme de boule, de cône, de cylindre ou de tore, ou comme segment ou segment partiel d'une enveloppe de ceux-ci.

29. Canule de sortie selon au moins une des revendications 24 à 28, **caractérisée en ce que** l'axe de positionnement (S) s'étend essentiellement perpendiculairement à la direction longitudinale de la conduite d'écoulement (2, 72).

30. Canule de sortie selon au moins une des revendications. 24 à 29, **caractérisée en ce que** la douille de positionnement (7, 57, 77, 107) présente essentiellement une section transversale en forme d'anneau de cercle ou de segment d'anneau de cercle, laquelle est réalisée de préférence avec un aplatissement sur un côté, dans un plan dans lequel est/sont agencé(s) au moins une conduite (2, 52, 72, 102, 3) et/ou un canal (12, 13, 14).

31. Canule de sortie selon au moins une des revendications 27 à 30, **caractérisée en ce que** l'ouverture de sortie (4, 54, 74, 104) est réalisée avec mobilité, en particulier avec mobilité en rotation par rapport à un corps de base (1a, 51, 71a, 101a, 201a) de la canule de sortie (1, 51, 71, 101, 201).

32. Canule de sortie selon au moins une des revendications 17 à 31, **caractérisée en ce que** la canule de sortie (1, 51, 71, 101, 201) est réalisée de manière divisible perpendiculairement à l'axe longitudinal de la conduite d'écoulement (2, 52, 72, 102) en au moins une partie de base (1c) et une partie interchangeable (1d, 51d, 71d, 101d, 201d).

33. Canule de sortie selon au moins une des revendications 24 à 32, **caractérisée en ce que** l'axe de positionnement (S) s'étend essentiellement parallèlement à la direction longitudinale de la conduite d'écoulement (2, 52, 102).

34. Canule de sortie selon au moins une des revendications 17 à 33, **caractérisée en ce qu'**un tronçon de conduite (2a) de la conduite d'écoulement (2) est réalisé de manière flexible.

35. Canule de sortie, en particulier un distributeur de liquide ou un système modulaire à canules de sortie, selon au moins une des revendications précédentes 1 à 34, en particulier un distributeur doseur, comprenant une conduite d'écoulement intégrée (2, 52, 72, 102) pour fournir un liquide par l'intermédiaire d'une ouverture de sortie (4, 54, 74, 104) et une conduite de retour intégrée (3, 53, 73, 103) s'étendant le long de la conduite d'écoulement (2, 52, 72, 102), dans laquelle l'ouverture de sortie (4, 54, 74, 104) peut être amenée dans une position dans laquelle elle peut être traversée par du liquide, aussi bien dans un état de mode de distribution dans lequel le liquide est évacué vers l'extérieur par l'ouverture de sortie (4, 54, 74, 104) que dans un état de mode de retour dans lequel le liquide est transporté depuis la conduite d'écoulement (2, 52, 72, 102) jusque dans la conduite de retour (3, 53, 73, 103) par l'ouverture de sortie (4, 54, 74, 104).
